# EUROPEAN PATENT SPECIFICATION

(11) **EP 4 402 926 B1**
(45) Date of publication and mention of the grant of the patent: **19.11.2025**
(21) Application number: 22786444.4
(22) Date of filing: 19.09.2022
(51) Int. Cl.: H04W 12/0431, H04L 9/08, H04W 12/041

(54) **GBA KEY DIVERSITY FOR MULTIPLE APPLICATIONS IN UE**
GBA-SCHLÜSSEL-DIVERSITÄT FÜR MEHRERE ANWENDUNGEN BEI EINEM BENUTZERGERÄT
DIVERSITÉ DE CLÉS GBA POUR DE MULTIPLES APPLICATIONS DANS UN UE

(30) Priority: 18.09.2021 WO PCT/CN2021/119346
(43) Date of publication of application: 24.07.2024
(73) Proprietor: Telefonaktiebolaget LM Ericsson (publ), 164 83 Stockholm (SE)
(72) Inventor: WANG, Cheng, Shanghai 200335 (CN); CASTELLANOS ZAMORA, David, 28026 MADRID Madrid (ES); KARAKOC, Ferhat, 34912 ISTANBUL (TR); TSIATSIS, Vlasios, 171 60 SOLNA (SE)
(74) Representative: Ericsson
(86) International application number: PCT/IB2022/058845
(87) International publication number: WO 2023/042176

(56) References cited:
- WO-A1-2007/034322
- US-A1- 2007 234 041
- "3rd Generation Partnership Project; Technical Specification Group Services and System Aspects; Generic Authentication Architecture (GAA); Generic Bootstrapping Architecture (GBA) Push function (Release 17)", vol. SA WG3, no. V17.0.0, 25 June 2021 (2021-06-25), pages 1 - 25, XP052029775, Retrieved from the Internet <URL:https://ftp.3gpp.org/Specs/archive/33_series/33.223/33223-h00.zip 33223-h00.doc> [retrieved on 20210625]

## Description

### RELATED APPLICATIONS

This application claims the benefit of PCT/CN2021/119346, filed September 18, 2021.

### TECHNICAL FIELD

The present disclosure related to a Generic Bootstrapping Architecture (GBA) feature in a cellular communications system.

### BACKGROUND

### GBA Feature

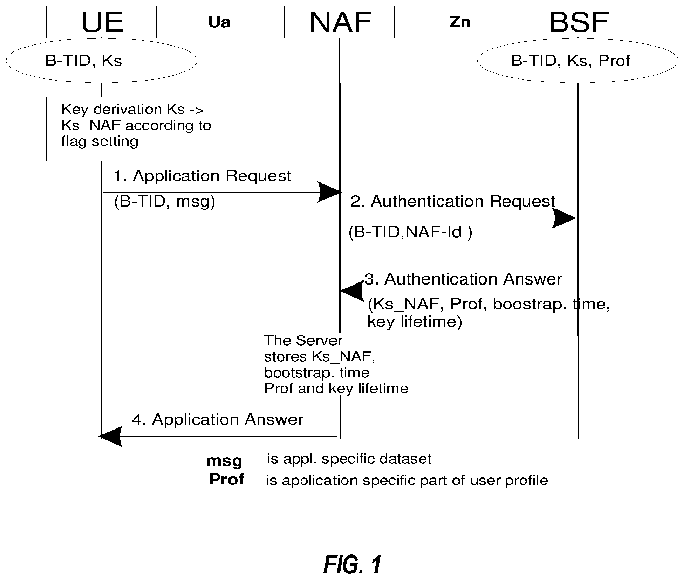

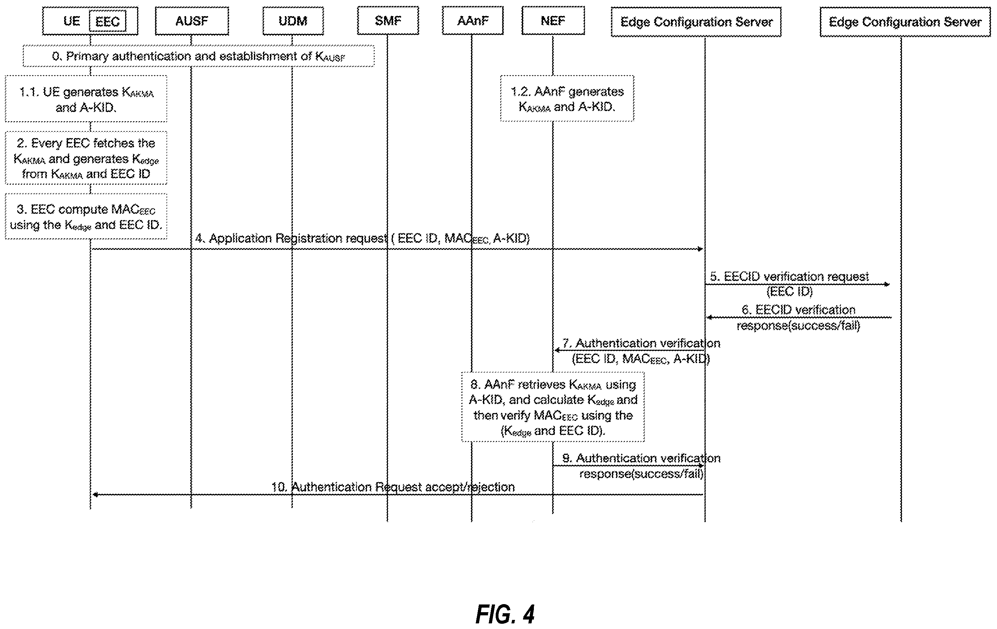

The Generic Bootstrapping Architecture (GBA) feature introduced in Third Generation Partnership Project (3GPP) Technical Specification (TS) 33.220 V17.1.0 provides a mechanism to bootstrap authentication and key agreement for application security. According to the feature, the network and the User Equipment (UE) derive the Ks key and the Bootstrapping Transaction Identifier (B-TID) as well as the Ks_NAF key where Ks_NAF is used to support the security of the communication between the UE and a Network Application Function (NAF). When the UE wants to use this feature, it may construct the key Ks_NAF and sends the B-TID to the NAF. The NAF can be located in the network or outside the network. The NAF requests the Ks_NAF for the B-TID from the Bootstrapping Server Function (BSF) by sending the B-TID to the BSF. After the authentication of the NAF by the network, the BSF sends the corresponding Ks_NAF to the NAF. Thereby, the shared key material Ks_NAF is available in the UE and the NAF to support the security of the communication between them. Figure 4.4 in 3GPP TS 33.220 gives an overview of the bootstrapping usage procedure and is reproduced herein as Figure 1.

Ks_NAF derivation is defined in 3GPP TS 33.220 as follows.

Ks_NAF is computed as
Ks_NAF = KDF (Ks, "gba-me" or "gba-u", RAND, IMPI, NAF_Id),
where KDF is the key derivation function as specified in Annex B, and the key derivation parameters consist of the user's IMPI, the NAF_Id and RAND. The NAF _Id is constructed as follows: NAF_Id = FQDN of the NAF ∥ Ua security protocol identifier. The Ua security protocol identifier is specified in Annex H. KDF shall be implemented in the ME.

Throughout the present disclosure, the term "GBA Application" is used to denote the applications "ME Application" and "UICC Application" that execute GBA procedures in the Mobile Equipment (ME) and Universal Integrated Circuit Card (UICC), respectively.

The terms "Application in the UE" and "Application" are used to denote the application clients in the UE, which want to communicate with NAF.

### Support of Edge Computing

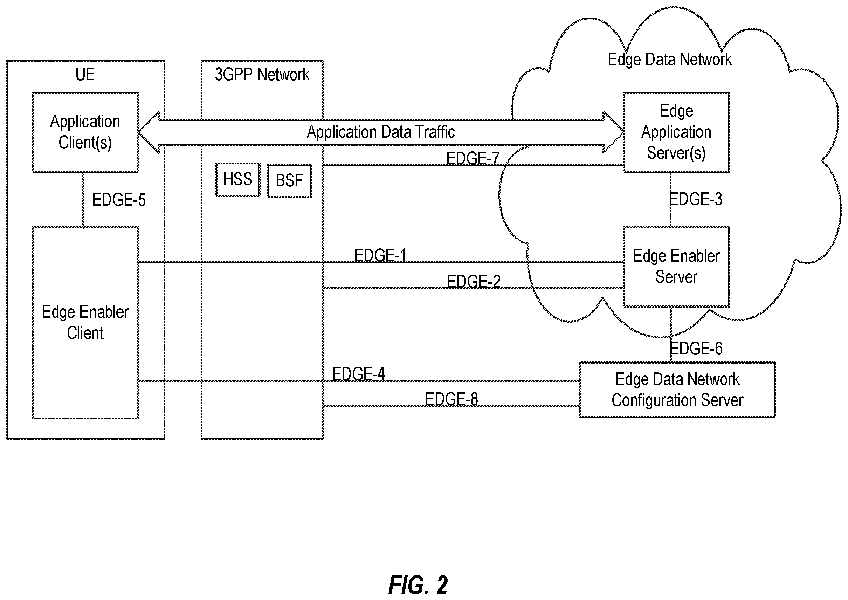

In 3GPP Rel-17, there is a study on Security Aspects of Enhancement of Support for Edge Computing in the Fifth Generation Core (5GC). Figure 2 shows a system diagram showing application servers, application clients, network functions of 3GPP networks from 3GPP TS 23.558.

Application Client and Edge Enabler Client (EEC) within UE box can be treated in general as the term "end user", "user client", "application on the UE" and "application" used in the present disclosure.

Edge Application Server (EAS), Edge Enabler Server (EES), and Edge Configuration Server (ECS) can be treated in general as the term "application server" aka AS, "network application function" aka NAF used in the present disclosure.

NAF(s) can be deployed by Mobile Network Operator (MNO) or by Edge Computing Service Provider (ECSP) or by Application Service Provider (ASP).

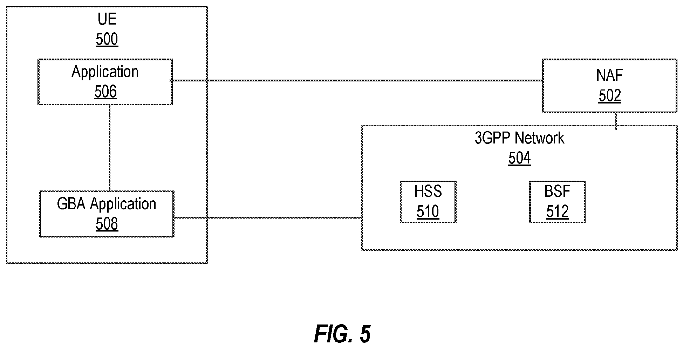

Not all 3GPP NFs are shown in Figure 2. The relevant NFs play a role in the present disclosure are the Home Subscriber Server (HSS) and BSF, as shown in the 3GPP network box in Figure 5.

Under the study on Security Aspects of Enhancement of Support for Edge Computing in 5GC, it is required to provide solutions for the authentication of EEC on the UE towards to the ECS and EES. Two possible solutions are the usage of Authentication and Key Management for Applications (AKMA) and GBA. There are some solutions depending on AKMA in the study technical report (3GPP TR 33.839). One of the solutions (solution #28) in 3GPP TR 33.839 proposes the following steps:
***** START EXCERPT FROM 3GPP TR 33.839 *****

### 6.28 Solution #28: Authentication between EEC and ECS based on AKMA

### 6.28.1 Introduction

This solution addressed key issue#2 Authentication and Authorization between EEC and ECS.

This solution proposes the authentication between EEC (Edge Enabler Client) and ECS (Edge Configuration Server) based on AKMA. To be more specific, it is proposed to use the K_{AKMA} derived from the AKMA procedure as the trust root to perform the authentication between EEC and ECS.

It is assumed in this solution that ECS is located outside of the MNO's network.

### 6.28.2 Solution details

### 6.28.2.1 Procedure

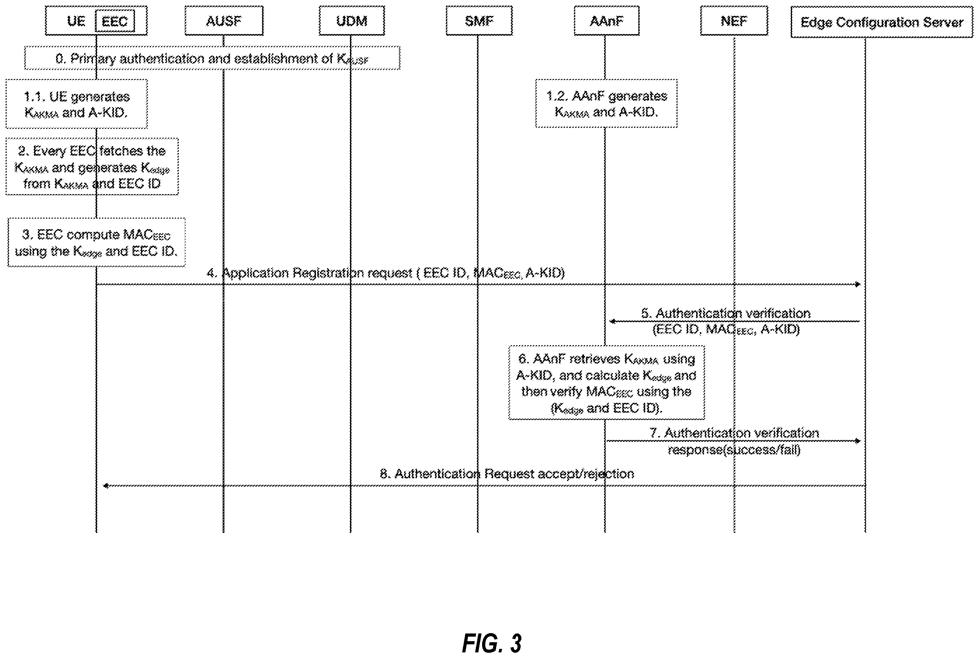

### [REPRODUCED HEREIN AS FIGURE 3]

### Figure-6.28.2.1-1. Authentication between the EEC and ECS based on AKMA

The authentication procedure details are as following:
Step 0: UE performs primary authentication with the network. Then K_{AUSF} is shared between UE and AUSF in Home network.
Step 1.1: UE generates K_{AKMA} and A-KID following AKMA procedure in TS 33.535 and stores them securely.
Step 1.2: AAnF generates K_{AKMA} and A-KID following AKMA procedure in TS 33.535 and stores them securely.
Step 2: Every EEC in this UE fetches the K_{AKMA} and generates K_{edge} from K_{AKMA} and EEC ID.
   NOTE: In this way, there will be one K_{AKMA} and multiple K_{edge} in every UE.
Step 3: Every EEC computes MAC_{EEC} using the K_{edge} and EEC ID.
Step 4: UE sends Application Registration request (EEC ID, MAC_{EEC}, A-KID) to ECS.
Step 5: ECS sends Authentication verification (EEC ID, MAC_{EEC}, A-KID) to AAnF for verification.
Step 6: AAnF retrieves K_{AKMA} using A-KID and calculates K_{edge} using K_{AKMA} and EEC ID, then verify MAC_{EEC} using the (K_{edge} and EEC ID).
Step 7: If AAnF verification success, then AAnF sends Authentication verification response(success) back to ECS, otherwise, AAnF sends Authentication verification response(fail) to ECS.
Step 8: Based on the verification results, ECS decides whether to accept or reject the authentication request, and sends Authentication Request accept/rejection to EEC in the UE.
   Editor's Note: It is FFS how EEC ID is authenticated.
   Editor's Note: It is FFS whether ECS could perform the authentication instead of AAnF.

### 6.28.2.2 Derivation of K_{edge} and K_{edge} ID

K_{edge} is generated using KDF defined in Annex B.2.0 of TS 33.220 [8]. When deriving a K_{edge} from K_{AKMA}, the following parameters should be used to form the input S to the KDF:
- FC = xxxx(to be allocated by 3GPP)
- P0 = <SUPI>,
- L0 = length of <SUPI>.

The input key KEY should be K_{AKMA}.

### 6.28.2.3 Generation of MAC_{EEC}

When deriving MAC_{EEC} in the UE and AAnF, the following parameters should be used to form the input S to the SHA-256 hashing algorithm:
- P0 = K_{edge},
- P1 = EEC ID,

The input S should be equal to the concatenation P0∥P1 of the P0 and P1.

The MAC_{EEC} is identified with the 32 least significant bits of the output of the SHA-256 function.

### 6.28.3 Solution Evaluation

This solution requires AAnF to perform the verification of the MAC_{EEC}.

This solution applies to the case when there are multiple EECs in one UE.
Editor's Note: Further evaluation is FFS.

### ***** END EXCERPT FROM 3GPP TR 33.839 *****

Also, to solve the Editor's Note (Editor's Note: It is FFS how EEC ID is authenticated.) in the solution #28 above, the following update to the solution was proposed in S3-212787, but it was not approved in SA3#104-e meeting.

### ***** START EXCERPT FROM S3-212787 *****

### 6.28 Solution #28: Authentication between EEC and ECS based on AKMA

### 6.28.1 Introduction

This solution addressed key issue#2 Authentication and Authorization between EEC and ECS. This solution proposes the authentication between EEC (Edge Enabler Client) and ECS (Edge Configuration Server) based on AKMA. To be more specific, it is proposed to use the K_{AKMA} derived from the AKMA procedure as the trust root to perform the authentication between EEC and ECS.

It is assumed in this solution that ECS is located outside of the MNO's network.

### 6.28.2 Solution details

### 6.28.2.1 Procedure

### [REPRODUCED HEREIN AS FIGURE 4]

### Figure-6.28.2.1-1. Authentication between the EEC and ECS based on AKMA

The authentication procedure details are as following:
Step 0: UE performs primary authentication with the network. Then K_{AUSF} is shared between UE and AUSF in Home network.
Step 1.1: UE generates K_{AKMA} and A-KID following AKMA procedure in TS 33.535 and stores them securely.
Step 1.2: AAnF generates K_{AKMA} and A-KID following AKMA procedure in TS 33.535 and stores them securely.
Step 2: Every EEC in this UE fetches the K_{AKMA} and generates K_{edge} from K_{AKMA} and EEC ID.
   NOTE 1: In this way, there will be one K_{AKMA} and multiple K_{edge} in every UE.
Step 3: Every EEC compute MAC_{EEC} using the K_{edge} and EEC ID.
Step 4: UE sends Application Registration request (EEC ID, MAC_{EEC}, A-KID) to ECS.
Step 5: ECS sends EECID verification request (EEC ID) to EES to check whether this EEC ID is authorized or not.
   NOTE 2: If the ECS has stored locally the list of all the authorized EEC IDs, it shall check locally.
Step 6: EES replied EECID verification response.
Step 7: ECS sends Authentication verification (EEC ID, MAC_{EEC}, A-KID) to AAnF for verification.
Step 8: AAnF retrieves K_{AKMA} using A-KID and calculates K_{edge} using K_{AKMA} and EEC ID, then verify MAC_{EEC} using the (K_{edge} and EEC ID).
Step 9: If AAnF verification success, then AAnF sends Authentication verification response(success) back to ECS, otherwise, AAnF sends Authentication verification response(fail) to ECS.
Step 10: Based on the verification results, ECS decides whether to accept or reject the authentication request, and sends Authentication Request accept/rejection to EEC in the UE.
   Editor's Note: It is FFS whether ECS could perform the authentication instead of AAnF.

### 6.28.2.2 Derivation of K_{edge} and K_{edge} ID

K_{edge} is generated using KDF defined in Annex B.2.0 of TS 33.220 [8]. When deriving a K_{edge} from K_{AKMA}, the following parameters should be used to form the input S to the KDF:
- FC = xxxx(to be allocated by 3GPP)
- P0 = <SUPI>,
- L0 = length of <SUPI>.

The input key KEY should be K_{AKMA}.

### 6.28.2.3 Generation of MAC_{EEC}

When deriving MAC_{EEC} in the UE and AAnF, the following parameters should be used to form the input S to the SHA-256 hashing algorithm:
- P0 = K_{edge},
- P1 = EEC ID,

The input S should be equal to the concatenation P0∥P1 of the P0 and P1.

The MAC_{EEC} is identified with the 32 least significant bits of the output of the SHA-256 function.

### 6.28.3 Solution Evaluation

This solution requires AAnF to perform the verification of the MAC_{EEC}.

This solution applies to the case when there are multiple EECs in one UE.
Editor's Note: Further evaluation is FFS.

### ***** END EXCERPT FROM S3-212787 *****

Also, in SA3#104-e meeting, one company brought a discussion paper on the usage of EEC ID in the key derivation, in S3-212784. The proposals in the discussion paper are as follows:
***** START EXCERPT FROM S3-212784 *****

### 3 DETAILED PROPOSALS

Proposal #1: When using AKMA as the basis for the authentication procedure, there is possibility that multiple EEC will derive the same Kakma in one UE. The key collosion is not acceptable from security point of view.

Proposal #2: There are 2 approaches to avoids the security issue:
- Proposal #2.1: Not using original AKMA as the basis for the authentication procedure.
- Proposal #2.2: Using AKMA with enhacement as the basis for the authentication procedure.

Proposal #3: EEC ID is the best choice for uniquely identifying the EEC during the authentication procedure. If Proposal #2.2 is adopted by SA3, then it is suggested to use EEC ID for the key isolation.

*Proposal #4: If proposal #3 is adopted by SA3, then it is suggested to accept solution* #28 as *the basis for the normative work of MEC, as solution* #*28 satisfies the security requirement to avoid key collision.*

### ***** END EXCERPT FROM S3-212784 *****

US 2007/0234041 discloses a method of authenticating an application. 3GPP TS 33.223 V17.0.0 discloses a GBA Push Function.

In TR 33.839, solution #26 (Clause 6. 26 Solution #26: GBA-based solution for EEC authentication and authorization framework with ECS and EES) and solution #29 (Clause Solution #29: Using Transport Layer Security (TLS) with GBA to protect edge interfaces) are the solutions that propose usage of GBA.

Some solutions have been proposed to handle multiple applications (clients) in UE case for the AKMA feature.

Some solutions have been proposed as an enhancement of AKMA to enable EES/ECS to authenticate Generic Public Subscription Identifier (GPSI) present by the EEC.

Some solutions have been proposed as an enhancement of AKMA to enable EES/ECS to handle multiple GPSI case.

### SUMMARY

The present invention is directed to systems and methods for Generic Bootstrapping Authentication (GBA) as defined in the appended claims.

### BRIEF DESCRIPTION OF THE DRAWINGS

The accompanying drawing figures incorporated in and forming a part of this specification illustrate several aspects of the disclosure, and together with the description serve to explain the principles of the disclosure.
Figure 1 is a reproduction of Figure 4.4 from 3GPP TS 33.220, which gives an overview of the bootstrapping usage procedure;
Figure 2 is a system diagram showing application servers, application clients, network functions of 3GPP networks from 3GPP TS 23.558 for support of edge computing;
Figure 3 is a reproduction of Figure 6.28.2.1-1 from 3GPP TR 33.839;
Figure 4 is a reproduction of Figure 6.28.2.1-1 from S3-212787;
Figure 5 illustrates an architecture for a first solution (Solution #1) of the present disclosure;
Figure 6 illustrates one example embodiment of the first solution of the present disclosure;
Figure 7 illustrates an architecture for a second solution (Solution #2) of the present disclosure;
Figure 8 illustrates one example embodiment of the second solution of the present disclosure;
Figure 9 illustrates one example embodiment of a third solution (Solution #3) of the present disclosure;
Figure 10 illustrates an example of a communication system in accordance with some embodiments of the present disclosure;
Figure 11 illustrates a User Equipment (UE) in accordance with some embodiments of the present disclosure;
Figure 12 illustrates a network node in accordance with some embodiments of the present disclosure;
Figure 13 illustrates a block diagram of a host, which may be an embodiment of the host of Figure 10, in accordance with various aspects of the present disclosure;
Figure 14 illustrates a block diagram illustrating a virtualization environment in which functions implemented by some embodiments of the present disclosure may be virtualized; and
Figure 15 illustrates a communication diagram of a host communicating via a network node with a UE over a partially wireless connection in accordance with some embodiments of the present disclosure.

The figures will be better understood by reference to the following details description.

### DETAILED DESCRIPTION

The embodiments set forth below represent information to enable those skilled in the art to practice the embodiments and illustrate the best mode of practicing the embodiments. Upon reading the following description in light of the accompanying drawing figures, those skilled in the art will understand the concepts of the disclosure and will recognize applications of these concepts not particularly addressed herein. It should be understood that these concepts and applications fall within the scope of the disclosure.

There are problems associated with the existing solutions. The Generic Bootstrapping Architecture (GBA) feature in 3GPP TS 33.220 is similar to the Authentication and Key Management for Applications (AKMA) feature and can be used to authenticate the UE, but not the applications (clients) in the UE. In the case in which there are multiple applications in the UE as mentioned in relation to Edge computing above, the different applications would receive the same Ks_NAF for those GBA based solutions, e.g. Sol#26/#29 in 3GPP TR 33.839. Thus, these solutions cannot meet the requirement that an application (client) should not be able to have the key of other applications in the same UE because any Edge Enabler Client (EEC) in the UE can generate keys of other EECs using the Ks_NAF and their EEC IDs.

Systems and methods are disclosed herein that provide solutions to the aforementioned and/or other problems. Two alternative solutions use Ks, NAF_Id, and APP_Id in the Ks_APP derivation where Ks_APP is the key used by the application in the UE and the Network Application Function (NAF) to secure their communication.

Solution #1: The GBA application in the UE authenticates and authorizes the Applications in the UE before giving the Ks_APP to the Applications. There can be two options for the key derivation (KDF is a key derivation function):
- Key derivation option #1: Ks_NAF = KDF (Ks, "gba-me" or "gba-u", RAND, IMPI, NAF_Id) as defined in GBA in TS 33.220.
   Ks_APP = KDF (Ks_NAF, APP-ID)
- Key derivation option #2: Ks_APP = KDF (Ks, "gba-me" or "gba-u", RAND, IMPI, NAF_Id, APP-ID)
Option #1 can be useful to hide the APP-ID in the first message sent from the Application on the UE to the NAF, by using Ks_NAF key.

Solution #2: Similar to Solution #1 but introduces a new functionality in the UE, referred to there as NAF Client, which runs in the UE. GBA Application in the UE authenticates and authorizes the NAF Client before giving the Ks_NAF key to the NAF Client. The NAF Client authenticates and authorizes the Application in the UE before giving the Ks_APP key to the Application. In this solution, the key derivation is executed as follows (similar to the key derivation option #1 of solution #1):
Ks_NAF = KDF (Ks, "gba-me" or "gba-u", RAND, IMPI, NAF_Id)
Ks_APP = KDF (Ks_NAF, APP-ID)

Solution #3: This solution provides a method to support GBA PUSH procedure for multiple applications in the UE, with similar approaches to those in solution #1 and #2.

Embodiments are described herein for solutions to realize key diversity for multiple applications in UE for GBA feature.

### Solution #1

The architecture for Solution #1 is illustrated in Figure 5. As illustrated, the architecture includes a UE 500, a NAF 502, and a 3GPP network 504. The UE 500 includes an Application 506 and a GBA Application 508. The 3GPP network 504 includes an HSS 510 and a BSF 512. Note that the NAF 502 can be internal or external to the 3GPP network 504. For the Edge Computing case, the Application 506 on the UE 500 is the EEC and the NAF 502 is the ECS or EES.

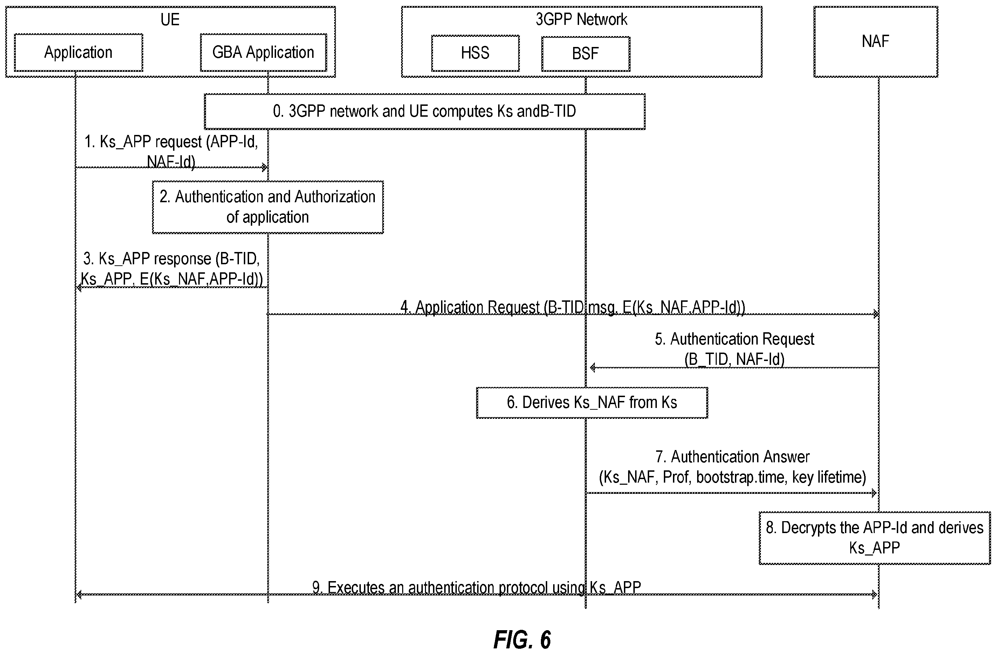

**Solution #1, Option #1:** The flow is depicted in Figure 6 and the steps are explained below. Note that msg in Step 4 is application specific dataset. Prof in Step 7 is application specific part of user profile.

**Step 0:** The UE 500 and the 3GPP network 504 run GBA bootstrapping and derive Ks. The GBA Application 508 learns the B-TID and Ks.

**Step 1:** For the Ks_APP request, the Application 506 inputs APP-ID and AF-ID to the GBA Application 508.

**Step 2:** GBA Application 508 executes an authentication and authorization protocol to verify APP-ID and verify the Application 506 is entitled to use NAF-ID and, if the result is successful, then performs the following operations where KDF is a key derivation function, E is an encryption algorithm such that E(X,Y) is the encryption of Y under the key X:
- Ks_NAF = KDF(Ks, "gba-me", RAND, IMPI, NAF_Id)
- Ks_APP = KDF(Ks_NAF, APP-ID)
- E(Ks_NAF, APP-ID)
   o Note: The APP_ID could be transferred at least in plaintext, i.e. the E(K, APP_ID)=APP_ID in the simplest form. Thus, in other words, the APP_ID could be sent unencrypted or encrypted with a "null" algorithm as the minimum requirement.

**Step 3:** The GBA Application 508 outputs B-TID, Ks_APP, and E(Ks_NAF, APP-ID) to the Application 506.

**Step 4:** The Application 506 sends an application request to the NAF 502, including the parameters B-TID, msg, and E(Ks_NAF, APP-ID). Again, msg is an application specific dataset.

**Step 5:** The NAF 502 requests Ks_NAF from the 3GPP network 504 by, in this example, sending an authentication request to the BSF 512. In this request, the NAF 502 sends B-TID and NAF-ID.

**Step 6:** The 3GPP network 504 (e.g., the BSF 512 in this example) executes some authentication and authorization for the NAF 502 and, if the result is successful, then derives the Ks_NAF such that Ks_NAF = KDF (Ks, "gba-me" or "gba-u", RAND, IMPI, NAF_Id). Note that "gba-me" and "gba-u" are strings indicating two different GBA functions (i.e., ME-based GBA and UICC-based GBA, cf clause 3.1 of 3GPP TS 33.220). RAND is a random number used as an input for key derivation (cf. Annex B.3 of 3GPP TS 33.220).

**Step 7:** The 3GPP network 504 (e.g., the BSF 512 in this example) sends Ks_NAF and other parameters to the NAF 502 in an authentication answer message.

**Step 8:** Using the Ks_NAF key, the NAF 502 decrypts the encrypted APP-ID and also derives Ks_APP such that Ks_APP = KDF(Ks_NAF, APP-ID).

**Step 9:** The Application 506 and the NAF 502 execute an authentication protocol using the Ks_APP key to ensure that they hold the same key. For example, if the NAF 502 authenticates the UE 500 using Hyper-Text Transfer Protocol (HTTP) over TLS based on the Generic Authentication Architecture (GAA) as specified in 3GPP TS 33.222, then the NAF 502 and the application 506 at the UE 500 will make use the B-TID as the username and the Ks_APP key as the passwords in the digest calculation.

For the encryption of APP-ID in Step 2, Ks or other keys derived from Ks can be used instead of Ks_NAF. In this case, the NAF 502 sends the encrypted APP-ID to the 3GPP network 504 (e.g., to the BSF 512) in step 5, and the 3GPP network 504 (e.g., the BSF 512) performs the decryption using Ks or other keys derived from Ks in step 6 and returns APP-ID to the AF in step 7. Thus, there will be no need to decrypt the APP-ID in step 8.

**Solution #1 Option #2:** This option differentiates from Solution #1, Option #1 as follows:
- the Ks_APP key is derived as Ks_APP = KDF(Ks, "gba-me" or "gba-u", RAND, IMPI, NAF_Id, APP-ID) in Step 2 of Figure 4.
- In step 3, the GBA Application 508 outputs B-TID and Ks_APP to the Application 506.
- In Step 4, the Application 506 sends B-TID, msg, and APP-ID to the NAF 502.
- In Step 5, the NAF 502 also sends the APP-ID to the 3GPP network 504 (e.g., to the BSF 512).
- In Step 6, the 3GPP network 504 (e.g., the BSF 512) computes the Ks_APP instead of Ks_NAF as follows: Ks_APP = KDF(Ks, "gba-me" or "gba-u", RAND, IMPI, NAF_Id, APP-ID),
- In Step 7, the 3GPP network 504 (e.g., the BSF 512) sends Ks_APP instead of Ks_NAF.
- In Step 8, there is no APP-ID decryption and no Ks_APP derivation because APP-ID has been received in plaintext in step 4 and Ks_APP has been received in Step 7.

To send APP-ID as encrypted in step 4, the following additional operations are done:
- In step 2, the GBA Application 508 also computes E(Ks, APP-ID)
- In step 3, the GBA Application 508 also outputs E(Ks, APP-ID) to the Application 506.
- In step 4, the Application 506 sends E(Ks, APP-ID) instead of APP-ID to the NAF 502.
- In step 5, the NAF 502 sends E(Ks, APP-ID) instead of APP-ID to the 3GPP network 504 (e.g., the BSF 512).
- In step 6, the 3GPP network 504 (e.g., the BSF 512) also decrypts the encrypted APP-ID.
- In step 7, the 3GPP network 504 (e.g., the BSF 512) sends also APP-ID to the NAF 502.

For the encryption of APP-ID in Step 2, Ks or other keys derived from Ks can be used.

### Solution #2

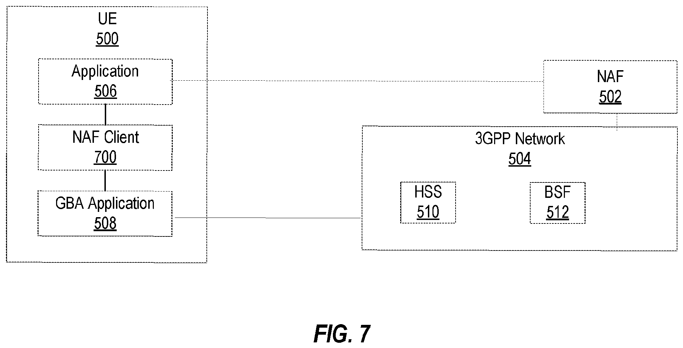

The architecture for Solution #2 is illustrated in Figure 7. As illustrated, the architecture for Solution #2 is the same as that for Solution #1 except that the UE 500 further includes an NAF client 700. Note that the NAF 502 can be internal or external to the 3GPP network 504. For the Edge Computing case, the Application 506 on the UE 500 is the EEC and the NAF 502 is the ECS or EES, and the NAF client 700 could be ECS client or EES client accordingly.

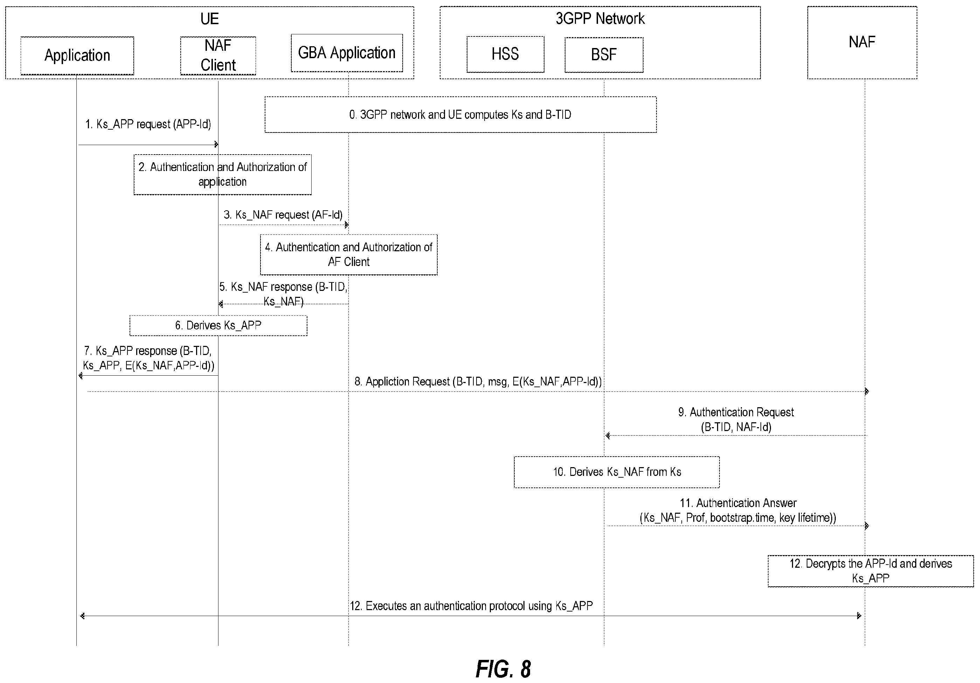

The flow for Solution #2 is depicted in Figure 8 and the steps are explained below.

**Step 0:** The UE 500 and the 3GPP network 504 run GBA bootstrapping and derive Ks. The GBA Application 508 learns the B-TID and Ks.

**Step 1:** For the Ks_APP request, the Application 506 inputs APP-ID to the NAF 700 Client. The Application 506 selects the NAF client 700 based on NAF-ID.

**Step 2:** The NAF Client 700 executes an authentication and authorization protocol and verifies APP-ID. If the result is successful, then the next steps are performed.

**Step 3:** For the Ks_NAF request, the NAF Client 700 inputs NAF-ID to the GBA Application 508.

**Step 4:** The GBA Application 508 executes an authentication and authorization protocol and verifies that the NAF client 700 is entitled to use NAF-ID. If the result is successful, then the GBA Application 508 performs the following operation:
Ks_NAF = KDF(Ks, "gba-me" or "gba-u", RAND, IMPI, NAF_Id)

**Step 5:** The GBA Application 508 sends B-TID and Ks_NAF to the NAF Client 700.

**Step 6:** The NAF Client 700 performs the following computations:
Ks_APP = KDF(Ks_NAF, APP-ID)
E(Ks_NAF, APP-ID)

**Step 7:** The NAF Client 700 outputs Ks_APP and E(Ks_NAF, APP-ID) to the Application 506.

**Step 8:** The Application 506 sends an application request to the NAF 502, including the parameters B-TID, msg, and E(Ks_NAF, APP-ID).

**Step 8-13.** These steps are the same as Steps 4-9 of procedure for Solution #1, Option #1.

### Solution #3

This solution describes the method to support GBA PUSH procedure for multiple applications in the UE 500. The architecture for Solution #3 is the same as that for Solution #1.

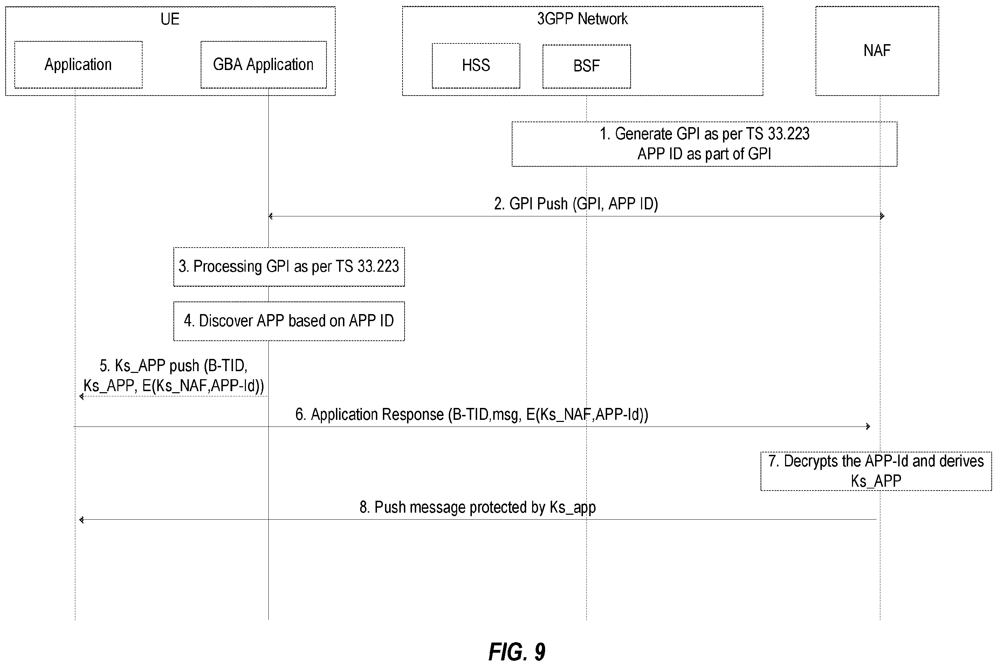

The flow for Solution #3 is depicted in Figure 9 and the steps are explained below.

**Step 1:** The NAF 502 decides to push information to an application 508 in the UE 500, and the NAF 502 requests the 3GPP network 504 to generate the GPI as per 3GPP TS 33.223.

In the GPI, the NAF 502 may include APP ID if it is known to NAF 502 from previous knowledge or configurated info in the NAF 502. Otherwise, the NAF 502 may include an indicator to request APP ID from the UE 500 and/or information to discover application in the UE 500 (e.g., service code); these data are protected in the GPI.

**Step2:** The NAF 502 sends GPI Push to the UE 500, which is received by the GBA application 508 in the UE 500. In the GPI, it may include the info about the APP 506 as mentioned in step 1.

**Step 3:** The GBA application 508 handles GPI as per 3GPP TS 33.223, retrieve B-TID, and Ks_NAF, etc.

**Step 4:** If APP id or indication to request APP ID is present in the GPI, the GBA application 508 discovers the application 506 based on the information received from the GPI, e.g. APP id, service code.

**Step 5:** The GBA application 508 authenticates and authorizes the application 506 and pushes the Ks_APP, B-TID to the application 506.

If APP id is known to the NAF 502, e.g. the indication to request APP ID is not received from GPI, go the step 8.

**Step 6:** If the indication to request APP ID is received from GPI, the application 506 sends an application response to the NAF 502, including the parameters B-TID, msg, and E(Ks_NAF, APP-ID).

**Step 7:** The NAF 502 decodes APP ID from E(Ks_NAF, APP-ID).

Optionally, step6/7 can be sent over the NAF security association set up between the GBA application 508 and the NAF 502, i.e. the message is passed through via the GBA application.

Encoding and decoding E(Ks_NAF, APP-ID) is same as Solution #1 and Solution #2 above.

**Step 8:** The NAF 502 and the application 508 proceed with Push message protected by Ks_APP.

### Additional Embodiments

This section describes additional embodiments that apply to all solutions described in previous sections. These additional embodiments use a freshness parameter in the computation of the Ks_APP instead of the APP-ID.

The GBA application 508 at the UE 500 for Solutions #1 and #2 or the NAF application 700 for the GBA-push Solution #3 may generate the freshness parameter. Therefore, it is not required for the Application 506 in the UE 500 to provide the APP-ID to the GBA application 508 at the UE 500 for the generation of the Ks_APP.

The freshness parameter may be, e.g., a counter, a time-based parameter, or a true random number.

The freshness parameter is then used in the same way as the APP-ID may be used in the signaling flows and procedures of Solutions #1, #2, and #3.

The use of a freshness parameter instead of a static APP-ID allows not only that the Ks_APP key provided to each application is different but also that the Ks_APP key provided to the same application in the UE 500 at different Ks_APP requests based on the same Ks_NAF is always different.

In addition to the freshness parameter, the GBA application 508 in the UE 500 (for Solution #1 and #2) or the NAF application 700 (for Solution #3) may provide a lifetime parameter to the application 506 at the UE 500. The use of the freshness parameter together with the lifetime of the Ks_APP provides a method to refresh the session key used over Ua. When the lifetime of the Ks_APP expires, the application 506 at the UE 500 requests a new Ks_APP which, thanks to the use of the freshness parameter instead of the APP-ID, will yield a different key.

This KS_APP refresh method may not be very useful for GBA as the GBA application at the UE 500 (Solutions #1 and #2) or the NAF 700 (Solution#3) can always trigger the refresh of the Ks_NAF/Ks_APP by triggering a new GBA bootstrapping operation (i.e. generation of a new B-TID and corresponding keys), but will be very useful for AKMA where the AKMA key is based on the keys generated during primary authentication in 5G and for which the UE 500 is not in full control on when the primary authentication is triggered.

### Example Systems in which Embodiments may be Implemented

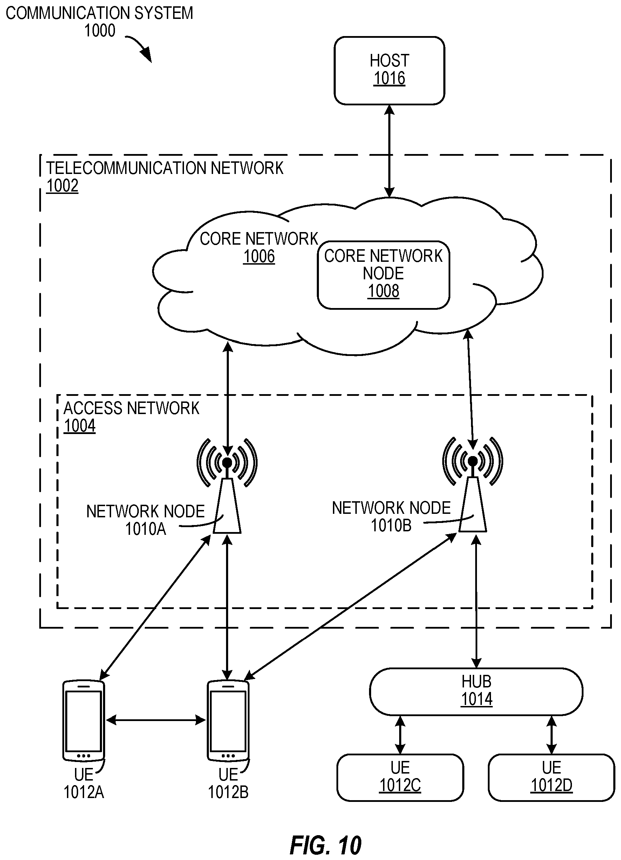

Figure 10 shows an example of a communication system 1000 in accordance with some embodiments.

In the example, the communication system 1000 includes a telecommunication network 1002 that includes an access network 1004, such as a Radio Access Network (RAN), and a core network 1006, which includes one or more core network nodes 1008. The access network 1004 includes one or more access network nodes, such as network nodes 1010A and 1010B (one or more of which may be generally referred to as network nodes 1010), or any other similar Third Generation Partnership Project (3GPP) access node or non-3GPP Access Point (AP). The network nodes 1010 facilitate direct or indirect connection of User Equipment (UE), such as by connecting UEs 1012A, 1012B, 1012C, and 1012D (one or more of which may be generally referred to as UEs 1012) to the core network 1006 over one or more wireless connections.

Example wireless communications over a wireless connection include transmitting and/or receiving wireless signals using electromagnetic waves, radio waves, infrared waves, and/or other types of signals suitable for conveying information without the use of wires, cables, or other material conductors. Moreover, in different embodiments, the communication system 1000 may include any number of wired or wireless networks, network nodes, UEs, and/or any other components or systems that may facilitate or participate in the communication of data and/or signals whether via wired or wireless connections. The communication system 1000 may include and/or interface with any type of communication, telecommunication, data, cellular, radio network, and/or other similar type of system.

The UEs 1012 may be any of a wide variety of communication devices, including wireless devices arranged, configured, and/or operable to communicate wirelessly with the network nodes 1010 and other communication devices. Similarly, the network nodes 1010 are arranged, capable, configured, and/or operable to communicate directly or indirectly with the UEs 1012 and/or with other network nodes or equipment in the telecommunication network 1002 to enable and/or provide network access, such as wireless network access, and/or to perform other functions, such as administration in the telecommunication network 1002.

In the depicted example, the core network 1006 connects the network nodes 1010 to one or more hosts, such as host 1016. These connections may be direct or indirect via one or more intermediary networks or devices. In other examples, network nodes may be directly coupled to hosts. The core network 1006 includes one or more core network nodes (e.g., core network node 1008) that are structured with hardware and software components. Features of these components may be substantially similar to those described with respect to the UEs, network nodes, and/or hosts, such that the descriptions thereof are generally applicable to the corresponding components of the core network node 1008. Example core network nodes include functions of one or more of a Mobile Switching Center (MSC), Mobility Management Entity (MME), Home Subscriber Server (HSS), Access and Mobility Management Function (AMF), Session Management Function (SMF), Authentication Server Function (AUSF), Subscription Identifier De-Concealing Function (SIDF), Unified Data Management (UDM), Security Edge Protection Proxy (SEPP), Network Exposure Function (NEF), and/or a User Plane Function (UPF).

The host 1016 may be under the ownership or control of a service provider other than an operator or provider of the access network 1004 and/or the telecommunication network 1002, and may be operated by the service provider or on behalf of the service provider. The host 1016 may host a variety of applications to provide one or more service. Examples of such applications include live and pre-recorded audio/video content, data collection services such as retrieving and compiling data on various ambient conditions detected by a plurality of UEs, analytics functionality, social media, functions for controlling or otherwise interacting with remote devices, functions for an alarm and surveillance center, or any other such function performed by a server.

As a whole, the communication system 1000 of Figure 10 enables connectivity between the UEs, network nodes, and hosts. In that sense, the communication system 1000 may be configured to operate according to predefined rules or procedures, such as specific standards that include, but are not limited to: Global System for Mobile Communications (GSM); Universal Mobile Telecommunications System (UMTS); Long Term Evolution (LTE), and/or other suitable Second, Third, Fourth, or Fifth Generation (2G, 3G, 4G, or 5G) standards, or any applicable future generation standard (e.g., Sixth Generation (6G)); Wireless Local Area Network (WLAN) standards, such as the Institute of Electrical and Electronics Engineers (IEEE) 802.11 standards (WiFi); and/or any other appropriate wireless communication standard, such as the Worldwide Interoperability for Microwave Access (WiMax), Bluetooth, Z-Wave, Near Field Communication (NFC) ZigBee, LiFi, and/or any Low Power Wide Area Network (LPWAN) standards such as LoRa and Sigfox.

In some examples, the telecommunication network 1002 is a cellular network that implements 3GPP standardized features. Accordingly, the telecommunication network 1002 may support network slicing to provide different logical networks to different devices that are connected to the telecommunication network 1002. For example, the telecommunication network 1002 may provide Ultra Reliable Low Latency Communication (URLLC) services to some UEs, while providing enhanced Mobile Broadband (eMBB) services to other UEs, and/or massive Machine Type Communication (mMTC)/massive Internet of Things (IoT) services to yet further UEs.

In some examples, the UEs 1012 are configured to transmit and/or receive information without direct human interaction. For instance, a UE may be designed to transmit information to the access network 1004 on a predetermined schedule, when triggered by an internal or external event, or in response to requests from the access network 1004. Additionally, a UE may be configured for operating in single- or multi-Radio Access Technology (RAT) or multi-standard mode. For example, a UE may operate with any one or combination of WiFi, New Radio (NR), and LTE, i.e. be configured for Multi-Radio Dual Connectivity (MR-DC), such as Evolved UMTS Terrestrial RAN (E-UTRAN) NR - Dual Connectivity (EN-DC).

In the example, a hub 1014 communicates with the access network 1004 to facilitate indirect communication between one or more UEs (e.g., UE 1012C and/or 1012D) and network nodes (e.g., network node 1010B). In some examples, the hub 1014 may be a controller, router, content source and analytics, or any of the other communication devices described herein regarding UEs. For example, the hub 1014 may be a broadband router enabling access to the core network 1006 for the UEs. As another example, the hub 1014 may be a controller that sends commands or instructions to one or more actuators in the UEs. Commands or instructions may be received from the UEs, network nodes 1010, or by executable code, script, process, or other instructions in the hub 1014. As another example, the hub 1014 may be a data collector that acts as temporary storage for UE data and, in some embodiments, may perform analysis or other processing of the data. As another example, the hub 1014 may be a content source. For example, for a UE that is a Virtual Reality (VR) headset, display, loudspeaker or other media delivery device, the hub 1014 may retrieve VR assets, video, audio, or other media or data related to sensory information via a network node, which the hub 1014 then provides to the UE either directly, after performing local processing, and/or after adding additional local content. In still another example, the hub 1014 acts as a proxy server or orchestrator for the UEs, in particular in if one or more of the UEs are low energy IoT devices.

The hub 1014 may have a constant/persistent or intermittent connection to the network node 1010B. The hub 1014 may also allow for a different communication scheme and/or schedule between the hub 1014 and UEs (e.g., UE 1012C and/or 1012D), and between the hub 1014 and the core network 1006. In other examples, the hub 1014 is connected to the core network 1006 and/or one or more UEs via a wired connection. Moreover, the hub 1014 may be configured to connect to a Machine-to-Machine (M2M) service provider over the access network 1004 and/or to another UE over a direct connection. In some scenarios, UEs may establish a wireless connection with the network nodes 1010 while still connected via the hub 1014 via a wired or wireless connection. In some embodiments, the hub 1014 may be a dedicated hub - that is, a hub whose primary function is to route communications to/from the UEs from/to the network node 1010B. In other embodiments, the hub 1014 may be a non-dedicated hub - that is, a device which is capable of operating to route communications between the UEs and the network node 1010B, but which is additionally capable of operating as a communication start and/or end point for certain data channels.

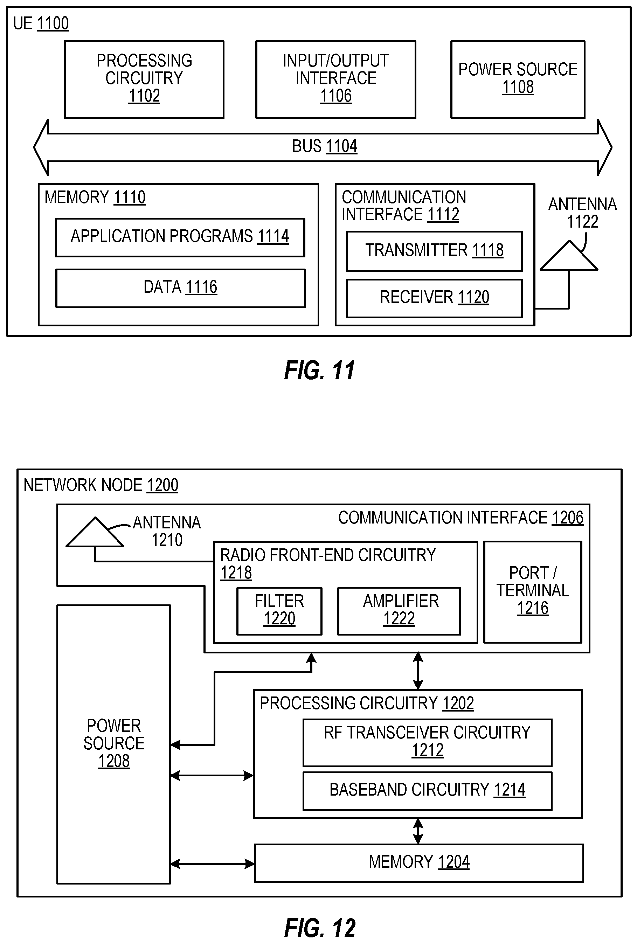

Figure 11 shows a UE 1100 in accordance with some embodiments. As used herein, a UE refers to a device capable, configured, arranged, and/or operable to communicate wirelessly with network nodes and/or other UEs. Examples of a UE include, but are not limited to, a smart phone, mobile phone, cell phone, Voice over Internet Protocol (VoIP) phone, wireless local loop phone, desktop computer, Personal Digital Assistant (PDA), wireless camera, gaming console or device, music storage device, playback appliance, wearable terminal device, wireless endpoint, mobile station, tablet, laptop, Laptop Embedded Equipment (LEE), Laptop Mounted Equipment (LME), smart device, wireless Customer Premise Equipment (CPE), vehicle-mounted or vehicle embedded/integrated wireless device, etc. Other examples include any UE identified by the 3GPP, including a Narrowband Internet of Things (NB-IoT) UE, a Machine Type Communication (MTC) UE, and/or an enhanced MTC (eMTC) UE.

A UE may support Device-to-Device (D2D) communication, for example by implementing a 3GPP standard for sidelink communication, Dedicated Short-Range Communication (DSRC), Vehicle-to-Vehicle (V2V), Vehicle-to-Infrastructure (V2I), or Vehicle-to-Everything (V2X). In other examples, a UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter).

The UE 1100 includes processing circuitry 1102 that is operatively coupled via a bus 1104 to an input/output interface 1106, a power source 1108, memory 1110, a communication interface 1112, and/or any other component, or any combination thereof. Certain UEs may utilize all or a subset of the components shown in Figure 11. The level of integration between the components may vary from one UE to another UE. Further, certain UEs may contain multiple instances of a component, such as multiple processors, memories, transceivers, transmitters, receivers, etc.

The processing circuitry 1102 is configured to process instructions and data and may be configured to implement any sequential state machine operative to execute instructions stored as machine-readable computer programs in the memory 1110. The processing circuitry 1102 may be implemented as one or more hardware-implemented state machines (e.g., in discrete logic, Field Programmable Gate Arrays (FPGAs), Application Specific Integrated Circuits (ASICs), etc.); programmable logic together with appropriate firmware; one or more stored computer programs, general purpose processors, such as a microprocessor or Digital Signal Processor (DSP), together with appropriate software; or any combination of the above. For example, the processing circuitry 1102 may include multiple Central Processing Units (CPUs).

In the example, the input/output interface 1106 may be configured to provide an interface or interfaces to an input device, output device, or one or more input and/or output devices. Examples of an output device include a speaker, a sound card, a video card, a display, a monitor, a printer, an actuator, an emitter, a smartcard, another output device, or any combination thereof. An input device may allow a user to capture information into the UE 1100. Examples of an input device include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, a biometric sensor, etc., or any combination thereof. An output device may use the same type of interface port as an input device. For example, a Universal Serial Bus (USB) port may be used to provide an input device and an output device.

In some embodiments, the power source 1108 is structured as a battery or battery pack. Other types of power sources, such as an external power source (e.g., an electricity outlet), photovoltaic device, or power cell, may be used. The power source 1108 may further include power circuitry for delivering power from the power source 1108 itself, and/or an external power source, to the various parts of the UE 1100 via input circuitry or an interface such as an electrical power cable. Delivering power may be, for example, for charging the power source 1108. Power circuitry may perform any formatting, converting, or other modification to the power from the power source 1108 to make the power suitable for the respective components of the UE 1100 to which power is supplied.

The memory 1110 may be or be configured to include memory such as Random Access Memory (RAM), Read Only Memory (ROM), Programmable ROM (PROM), Erasable PROM (EPROM), Electrically EPROM (EEPROM), magnetic disks, optical disks, hard disks, removable cartridges, flash drives, and so forth. In one example, the memory 1110 includes one or more application programs 1114, such as an operating system, web browser application, a widget, gadget engine, or other application, and corresponding data 1116. The memory 1110 may store, for use by the UE 1100, any of a variety of various operating systems or combinations of operating systems.

The memory 1110 may be configured to include a number of physical drive units, such as Redundant Array of Independent Disks (RAID), flash memory, USB flash drive, external hard disk drive, thumb drive, pen drive, key drive, High Density Digital Versatile Disc (HD-DVD) optical disc drive, internal hard disk drive, Blu-Ray optical disc drive, Holographic Digital Data Storage (HDDS) optical disc drive, external mini Dual In-line Memory Module (DIMM), Synchronous Dynamic RAM (SDRAM), external micro-DIMM SDRAM, smartcard memory such as a tamper resistant module in the form of a Universal Integrated Circuit Card (UICC) including one or more Subscriber Identity Modules (SIMs), such as a Universal SIM (USIM) and/or Internet Protocol Multimedia Services Identity Module (ISIM), other memory, or any combination thereof. The UICC may for example be an embedded UICC (eUICC), integrated UICC (iUICC) or a removable UICC commonly known as a 'SIM card.' The memory 1110 may allow the UE 1100 to access instructions, application programs, and the like stored on transitory or non-transitory memory media, to off-load data, or to upload data. An article of manufacture, such as one utilizing a communication system, may be tangibly embodied as or in the memory 1110, which may be or comprise a device-readable storage medium.

The processing circuitry 1102 may be configured to communicate with an access network or other network using the communication interface 1112. The communication interface 1112 may comprise one or more communication subsystems and may include or be communicatively coupled to an antenna 1122. The communication interface 1112 may include one or more transceivers used to communicate, such as by communicating with one or more remote transceivers of another device capable of wireless communication (e.g., another UE or a network node in an access network). Each transceiver may include a transmitter 1118 and/or a receiver 1120 appropriate to provide network communications (e.g., optical, electrical, frequency allocations, and so forth). Moreover, the transmitter 1118 and receiver 1120 may be coupled to one or more antennas (e.g., the antenna 1122) and may share circuit components, software, or firmware, or alternatively be implemented separately.

In the illustrated embodiment, communication functions of the communication interface 1112 may include cellular communication, WiFi communication, LPWAN communication, data communication, voice communication, multimedia communication, short-range communications such as Bluetooth, NFC, location-based communication such as the use of the Global Positioning System (GPS) to determine a location, another like communication function, or any combination thereof. Communications may be implemented according to one or more communication protocols and/or standards, such as IEEE 802.11, Code Division Multiplexing Access (CDMA), Wideband CDMA (WCDMA), GSM, LTE, NR, UMTS, WiMax, Ethernet, Transmission Control Protocol/Internet Protocol (TCP/IP), Synchronous Optical Networking (SONET), Asynchronous Transfer Mode (ATM), Quick User Datagram Protocol Internet Connection (QUIC), Hypertext Transfer Protocol (HTTP), and so forth.

Regardless of the type of sensor, a UE may provide an output of data captured by its sensors, through its communication interface 1112, or via a wireless connection to a network node. Data captured by sensors of a UE can be communicated through a wireless connection to a network node via another UE. The output may be periodic (e.g., once every 15 minutes if it reports the sensed temperature), random (e.g., to even out the load from reporting from several sensors), in response to a triggering event (e.g., when moisture is detected an alert is sent), in response to a request (e.g., a user initiated request), or a continuous stream (e.g., a live video feed of a patient).

As another example, a UE comprises an actuator, a motor, or a switch related to a communication interface configured to receive wireless input from a network node via a wireless connection. In response to the received wireless input the states of the actuator, the motor, or the switch may change. For example, the UE may comprise a motor that adjusts the control surfaces or rotors of a drone in flight according to the received input or to a robotic arm performing a medical procedure according to the received input.

A UE, when in the form of an IoT device, may be a device for use in one or more application domains, these domains comprising, but not limited to, city wearable technology, extended industrial application, and healthcare. Non-limiting examples of such an IoT device are a device which is or which is embedded in: a connected refrigerator or freezer, a television, a connected lighting device, an electricity meter, a robot vacuum cleaner, a voice controlled smart speaker, a home security camera, a motion detector, a thermostat, a smoke detector, a door/window sensor, a flood/moisture sensor, an electrical door lock, a connected doorbell, an air conditioning system like a heat pump, an autonomous vehicle, a surveillance system, a weather monitoring device, a vehicle parking monitoring device, an electric vehicle charging station, a smart watch, a fitness tracker, a head-mounted display for Augmented Reality (AR) or VR, a wearable for tactile augmentation or sensory enhancement, a water sprinkler, an animal- or item-tracking device, a sensor for monitoring a plant or animal, an industrial robot, an Unmanned Aerial Vehicle (UAV), and any kind of medical device, like a heart rate monitor or a remote controlled surgical robot. A UE in the form of an IoT device comprises circuitry and/or software in dependence of the intended application of the IoT device in addition to other components as described in relation to the UE 1100 shown in Figure 11.

As yet another specific example, in an IoT scenario, a UE may represent a machine or other device that performs monitoring and/or measurements and transmits the results of such monitoring and/or measurements to another UE and/or a network node. The UE may in this case be an M2M device, which may in a 3GPP context be referred to as an MTC device. As one particular example, the UE may implement the 3GPP NB-IoT standard. In other scenarios, a UE may represent a vehicle, such as a car, a bus, a truck, a ship, an airplane, or other equipment that is capable of monitoring and/or reporting on its operational status or other functions associated with its operation.

In practice, any number of UEs may be used together with respect to a single use case. For example, a first UE might be or be integrated in a drone and provide the drone's speed information (obtained through a speed sensor) to a second UE that is a remote controller operating the drone. When the user makes changes from the remote controller, the first UE may adjust the throttle on the drone (e.g., by controlling an actuator) to increase or decrease the drone's speed. The first and/or the second UE can also include more than one of the functionalities described above. For example, a UE might comprise the sensor and the actuator and handle communication of data for both the speed sensor and the actuators.

Figure 12 shows a network node 1200 in accordance with some embodiments. As used herein, network node refers to equipment capable, configured, arranged, and/or operable to communicate directly or indirectly with a UE and/or with other network nodes or equipment in a telecommunication network. Examples of network nodes include, but are not limited to, APs (e.g., radio APs), Base Stations (BSs) (e.g., radio BSs, Node Bs, evolved Node Bs (eNBs), and NR Node Bs (gNBs)).

BSs may be categorized based on the amount of coverage they provide (or, stated differently, their transmit power level) and so, depending on the provided amount of coverage, may be referred to as femto BSs, pico BSs, micro BSs, or macro BSs. A BS may be a relay node or a relay donor node controlling a relay. A network node may also include one or more (or all) parts of a distributed radio BS such as centralized digital units and/or Remote Radio Units (RRUs), sometimes referred to as Remote Radio Heads (RRHs). Such RRUs may or may not be integrated with an antenna as an antenna integrated radio. Parts of a distributed radio BS may also be referred to as nodes in a Distributed Antenna System (DAS).

Other examples of network nodes include multiple Transmission Point (multi-TRP) 5G access nodes, Multi-Standard Radio (MSR) equipment such as MSR BSs, network controllers such as Radio Network Controllers (RNCs) or BS Controllers (BSCs), Base Transceiver Stations (BTSs), transmission points, transmission nodes, Multi-Cell/Multicast Coordination Entities (MCEs), Operation and Maintenance (O&M) nodes, Operations Support System (OSS) nodes, Self-Organizing Network (SON) nodes, positioning nodes (e.g., Evolved Serving Mobile Location Centers (E-SMLCs)), and/or Minimization of Drive Tests (MDTs).

The network node 1200 includes processing circuitry 1202, memory 1204, a communication interface 1206, and a power source 1208. The network node 1200 may be composed of multiple physically separate components (e.g., a Node B component and an RNC component, or a BTS component and a BSC component, etc.), which may each have their own respective components. In certain scenarios in which the network node 1200 comprises multiple separate components (e.g., BTS and BSC components), one or more of the separate components may be shared among several network nodes. For example, a single RNC may control multiple Node Bs. In such a scenario, each unique Node B and RNC pair may in some instances be considered a single separate network node. In some embodiments, the network node 1200 may be configured to support multiple RATs. In such embodiments, some components may be duplicated (e.g., separate memory 1204 for different RATs) and some components may be reused (e.g., an antenna 1210 may be shared by different RATs). The network node 1200 may also include multiple sets of the various illustrated components for different wireless technologies integrated into network node 1200, for example GSM, WCDMA, LTE, NR, WiFi, Zigbee, Z-wave, Long Range Wide Area Network (LoRaWAN), Radio Frequency Identification (RFID), or Bluetooth wireless technologies. These wireless technologies may be integrated into the same or different chip or set of chips and other components within the network node 1200.

The processing circuitry 1202 may comprise a combination of one or more of a microprocessor, controller, microcontroller, CPU, DSP, ASIC, FPGA, or any other suitable computing device, resource, or combination of hardware, software, and/or encoded logic operable to provide, either alone or in conjunction with other network node 1200 components, such as the memory 1204, to provide network node 1200 functionality.

In some embodiments, the processing circuitry 1202 includes a System on a Chip (SOC). In some embodiments, the processing circuitry 1202 includes one or more of Radio Frequency (RF) transceiver circuitry 1212 and baseband processing circuitry 1214. In some embodiments, the RF transceiver circuitry 1212 and the baseband processing circuitry 1214 may be on separate chips (or sets of chips), boards, or units, such as radio units and digital units. In alternative embodiments, part or all of the RF transceiver circuitry 1212 and the baseband processing circuitry 1214 may be on the same chip or set of chips, boards, or units.

The memory 1204 may comprise any form of volatile or non-volatile computer-readable memory including, without limitation, persistent storage, solid state memory, remotely mounted memory, magnetic media, optical media, RAM, ROM, mass storage media (for example, a hard disk), removable storage media (for example, a flash drive, a Compact Disk (CD), or a Digital Video Disk (DVD)), and/or any other volatile or non-volatile, non-transitory device-readable, and/or computer-executable memory devices that store information, data, and/or instructions that may be used by the processing circuitry 1202. The memory 1204 may store any suitable instructions, data, or information, including a computer program, software, an application including one or more of logic, rules, code, tables, and/or other instructions capable of being executed by the processing circuitry 1202 and utilized by the network node 1200. The memory 1204 may be used to store any calculations made by the processing circuitry 1202 and/or any data received via the communication interface 1206. In some embodiments, the processing circuitry 1202 and the memory 1204 are integrated.

The communication interface 1206 is used in wired or wireless communication of signaling and/or data between a network node, access network, and/or UE. As illustrated, the communication interface 1206 comprises port(s)/terminal(s) 1216 to send and receive data, for example to and from a network over a wired connection. The communication interface 1206 also includes radio front-end circuitry 1218 that may be coupled to, or in certain embodiments a part of, the antenna 1210. The radio front-end circuitry 1218 comprises filters 1220 and amplifiers 1222. The radio front-end circuitry 1218 may be connected to the antenna 1210 and the processing circuitry 1202. The radio front-end circuitry 1218 may be configured to condition signals communicated between the antenna 1210 and the processing circuitry 1202. The radio front-end circuitry 1218 may receive digital data that is to be sent out to other network nodes or UEs via a wireless connection. The radio front-end circuitry 1218 may convert the digital data into a radio signal having the appropriate channel and bandwidth parameters using a combination of the filters 1220 and/or the amplifiers 1222. The radio signal may then be transmitted via the antenna 1210. Similarly, when receiving data, the antenna 1210 may collect radio signals which are then converted into digital data by the radio front-end circuitry 1218. The digital data may be passed to the processing circuitry 1202. In other embodiments, the communication interface 1206 may comprise different components and/or different combinations of components.

In certain alternative embodiments, the network node 1200 does not include separate radio front-end circuitry 1218; instead, the processing circuitry 1202 includes radio front-end circuitry and is connected to the antenna 1210. Similarly, in some embodiments, all or some of the RF transceiver circuitry 1212 is part of the communication interface 1206. In still other embodiments, the communication interface 1206 includes the one or more ports or terminals 1216, the radio front-end circuitry 1218, and the RF transceiver circuitry 1212 as part of a radio unit (not shown), and the communication interface 1206 communicates with the baseband processing circuitry 1214, which is part of a digital unit (not shown).

The antenna 1210 may include one or more antennas, or antenna arrays, configured to send and/or receive wireless signals. The antenna 1210 may be coupled to the radio front-end circuitry 1218 and may be any type of antenna capable of transmitting and receiving data and/or signals wirelessly. In certain embodiments, the antenna 1210 is separate from the network node 1200 and connectable to the network node 1200 through an interface or port.

The antenna 1210, the communication interface 1206, and/or the processing circuitry 1202 may be configured to perform any receiving operations and/or certain obtaining operations described herein as being performed by the network node 1200. Any information, data, and/or signals may be received from a UE, another network node, and/or any other network equipment. Similarly, the antenna 1210, the communication interface 1206, and/or the processing circuitry 1202 may be configured to perform any transmitting operations described herein as being performed by the network node 1200. Any information, data, and/or signals may be transmitted to a UE, another network node, and/or any other network equipment.

The power source 1208 provides power to the various components of the network node 1200 in a form suitable for the respective components (e.g., at a voltage and current level needed for each respective component). The power source 1208 may further comprise, or be coupled to, power management circuitry to supply the components of the network node 1200 with power for performing the functionality described herein. For example, the network node 1200 may be connectable to an external power source (e.g., the power grid or an electricity outlet) via input circuitry or an interface such as an electrical cable, whereby the external power source supplies power to power circuitry of the power source 1208. As a further example, the power source 1208 may comprise a source of power in the form of a battery or battery pack which is connected to, or integrated in, power circuitry. The battery may provide backup power should the external power source fail.

Embodiments of the network node 1200 may include additional components beyond those shown in Figure 12 for providing certain aspects of the network node's functionality, including any of the functionality described herein and/or any functionality necessary to support the subject matter described herein. For example, the network node 1200 may include user interface equipment to allow input of information into the network node 1200 and to allow output of information from the network node 1200. This may allow a user to perform diagnostic, maintenance, repair, and other administrative functions for the network node 1200.

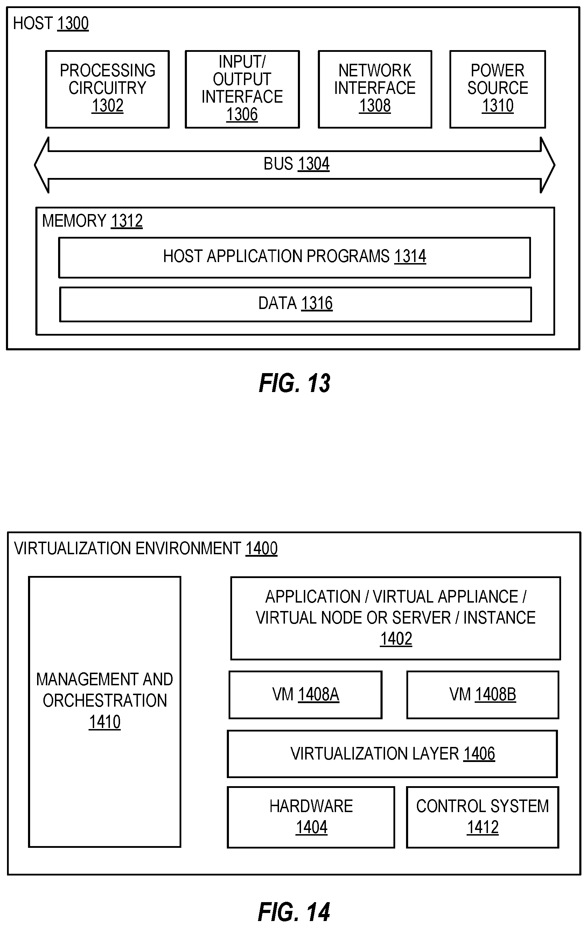

Figure 13 is a block diagram of a host 1300, which may be an embodiment of the host 1016 of Figure 10, in accordance with various aspects described herein. As used herein, the host 1300 may be or comprise various combinations of hardware and/or software including a standalone server, a blade server, a cloud-implemented server, a distributed server, a virtual machine, container, or processing resources in a server farm. The host 1300 may provide one or more services to one or more UEs.

The host 1300 includes processing circuitry 1302 that is operatively coupled via a bus 1304 to an input/output interface 1306, a network interface 1308, a power source 1310, and memory 1312. Other components may be included in other embodiments. Features of these components may be substantially similar to those described with respect to the devices of previous figures, such as Figures 11 and 12, such that the descriptions thereof are generally applicable to the corresponding components of the host 1300.

The memory 1312 may include one or more computer programs including one or more host application programs 1314 and data 1316, which may include user data, e.g. data generated by a UE for the host 1300 or data generated by the host 1300 for a UE. Embodiments of the host 1300 may utilize only a subset or all of the components shown. The host application programs 1314 may be implemented in a container-based architecture and may provide support for video codecs (e.g., Versatile Video Coding (VVC), High Efficiency Video Coding (HEVC), Advanced Video Coding (AVC), Moving Picture Experts Group (MPEG), VP9) and audio codecs (e.g., Free Lossless Audio Codec (FLAC), Advanced Audio Coding (AAC), MPEG, G.711), including transcoding for multiple different classes, types, or implementations of UEs (e.g., handsets, desktop computers, wearable display systems, and heads-up display systems). The host application programs 1314 may also provide for user authentication and licensing checks and may periodically report health, routes, and content availability to a central node, such as a device in or on the edge of a core network. Accordingly, the host 1300 may select and/or indicate a different host for Over-The-Top (OTT) services for a UE. The host application programs 1314 may support various protocols, such as the HTTP Live Streaming (HLS) protocol, Real-Time Messaging Protocol (RTMP), Real-Time Streaming Protocol (RTSP), Dynamic Adaptive Streaming over HTTP (DASH or MPEG-DASH), etc.

Figure 14 is a block diagram illustrating a virtualization environment 1400 in which functions implemented by some embodiments may be virtualized. In the present context, virtualizing means creating virtual versions of apparatuses or devices which may include virtualizing hardware platforms, storage devices, and networking resources. As used herein, virtualization can be applied to any device described herein, or components thereof, and relates to an implementation in which at least a portion of the functionality is implemented as one or more virtual components. Some or all of the functions described herein may be implemented as virtual components executed by one or more Virtual Machines (VMs) implemented in one or more virtual environments 1400 hosted by one or more of hardware nodes, such as a hardware computing device that operates as a network node, UE, core network node, or host. Further, in embodiments in which the virtual node does not require radio connectivity (e.g., a core network node or host), then the node may be entirely virtualized.

Applications 1402 (which may alternatively be called software instances, virtual appliances, network functions, virtual nodes, virtual network functions, etc.) are run in the virtualization environment Q400 to implement some of the features, functions, and/or benefits of some of the embodiments disclosed herein.

Hardware 1404 includes processing circuitry, memory that stores software and/or instructions executable by hardware processing circuitry, and/or other hardware devices as described herein, such as a network interface, input/output interface, and so forth. Software may be executed by the processing circuitry to instantiate one or more virtualization layers 1406 (also referred to as hypervisors or VM Monitors (VMMs)), provide VMs 1408A and 1408B (one or more of which may be generally referred to as VMs 1408), and/or perform any of the functions, features, and/or benefits described in relation with some embodiments described herein. The virtualization layer 1406 may present a virtual operating platform that appears like networking hardware to the VMs 1408.

The VMs 1408 comprise virtual processing, virtual memory, virtual networking, or interface and virtual storage, and may be run by a corresponding virtualization layer 1406. Different embodiments of the instance of a virtual appliance 1402 may be implemented on one or more of the VMs 1408, and the implementations may be made in different ways. Virtualization of the hardware is in some contexts referred to as Network Function Virtualization (NFV). NFV may be used to consolidate many network equipment types onto industry standard high volume server hardware, physical switches, and physical storage, which can be located in data centers and customer premise equipment.

In the context of NFV, a VM 1408 may be a software implementation of a physical machine that runs programs as if they were executing on a physical, non-virtualized machine. Each of the VMs 1408, and that part of the hardware 1404 that executes that VM, be it hardware dedicated to that VM and/or hardware shared by that VM with others of the VMs 1408, forms separate virtual network elements. Still in the context of NFV, a virtual network function is responsible for handling specific network functions that run in one or more VMs 1408 on top of the hardware 1404 and corresponds to the application 1402.

The hardware 1404 may be implemented in a standalone network node with generic or specific components. The hardware 1404 may implement some functions via virtualization. Alternatively, the hardware 1404 may be part of a larger cluster of hardware (e.g., such as in a data center or CPE) where many hardware nodes work together and are managed via management and orchestration 1410, which, among others, oversees lifecycle management of the applications 1402. In some embodiments, the hardware 1404 is coupled to one or more radio units that each include one or more transmitters and one or more receivers that may be coupled to one or more antennas. Radio units may communicate directly with other hardware nodes via one or more appropriate network interfaces and may be used in combination with the virtual components to provide a virtual node with radio capabilities, such as a RAN or a BS. In some embodiments, some signaling can be provided with the use of a control system 1412 which may alternatively be used for communication between hardware nodes and radio units.

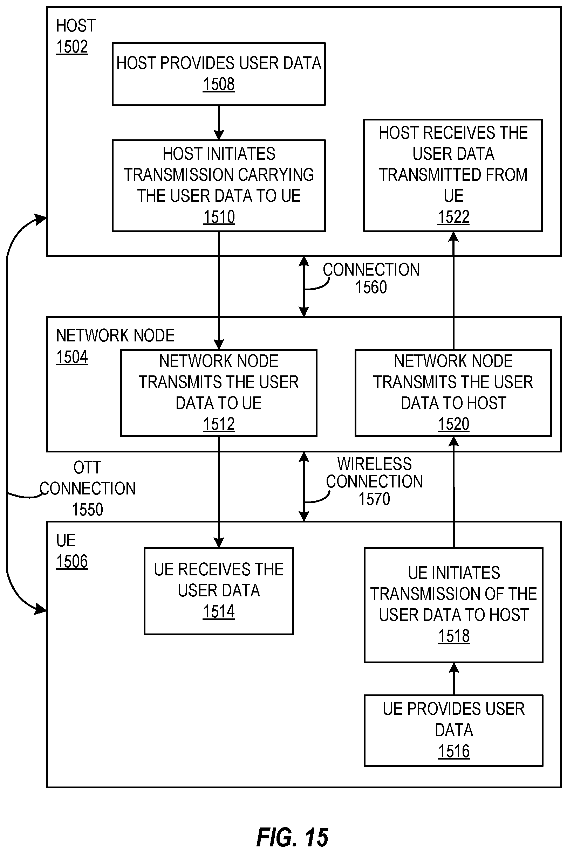

Figure 15 shows a communication diagram of a host 1502 communicating via a network node 1504 with a UE 1506 over a partially wireless connection in accordance with some embodiments. Example implementations, in accordance with various embodiments, of the UE (such as the UE 1012A of Figure 10 and/or the UE 1100 of Figure 11), the network node (such as the network node 1010A of Figure 10 and/or the network node 1200 of Figure 12), and the host (such as the host 1016 of Figure 10 and/or the host 1300 of Figure 13) discussed in the preceding paragraphs will now be described with reference to Figure 15.

Like the host 1300, embodiments of the host 1502 include hardware, such as a communication interface, processing circuitry, and memory. The host 1502 also includes software, which is stored in or is accessible by the host 1502 and executable by the processing circuitry. The software includes a host application that may be operable to provide a service to a remote user, such as the UE 1506 connecting via an OTT connection 1550 extending between the UE 1506 and the host 1502. In providing the service to the remote user, a host application may provide user data which is transmitted using the OTT connection 1550.

The network node 1504 includes hardware enabling it to communicate with the host 1502 and the UE 1506 via a connection 1560. The connection 1560 may be direct or pass through a core network (like the core network 1006 of Figure 10) and/or one or more other intermediate networks, such as one or more public, private, or hosted networks. For example, an intermediate network may be a backbone network or the Internet.

The UE 1506 includes hardware and software, which is stored in or accessible by the UE 1506 and executable by the UE's processing circuitry. The software includes a client application, such as a web browser or operator-specific "app" that may be operable to provide a service to a human or non-human user via the UE 1506 with the support of the host 1502. In the host 1502, an executing host application may communicate with the executing client application via the OTT connection 1550 terminating at the UE 1506 and the host 1502. In providing the service to the user, the UE's client application may receive request data from the host's host application and provide user data in response to the request data. The OTT connection 1550 may transfer both the request data and the user data. The UE's client application may interact with the user to generate the user data that it provides to the host application through the OTT connection 1550.

The OTT connection 1550 may extend via the connection 1560 between the host 1502 and the network node 1504 and via a wireless connection 1570 between the network node 1504 and the UE 1506 to provide the connection between the host 1502 and the UE 1506. The connection 1560 and the wireless connection 1570, over which the OTT connection 1550 may be provided, have been drawn abstractly to illustrate the communication between the host 1502 and the UE 1506 via the network node 1504, without explicit reference to any intermediary devices and the precise routing of messages via these devices.

As an example of transmitting data via the OTT connection 1550, in step 1508, the host 1502 provides user data, which may be performed by executing a host application. In some embodiments, the user data is associated with a particular human user interacting with the UE 1506. In other embodiments, the user data is associated with a UE 1506 that shares data with the host 1502 without explicit human interaction. In step 1510, the host 1502 initiates a transmission carrying the user data towards the UE 1506. The host 1502 may initiate the transmission responsive to a request transmitted by the UE 1506. The request may be caused by human interaction with the UE 1506 or by operation of the client application executing on the UE 1506. The transmission may pass via the network node 1504 in accordance with the teachings of the embodiments described throughout this disclosure. Accordingly, in step 1512, the network node 1504 transmits to the UE 1506 the user data that was carried in the transmission that the host 1502 initiated, in accordance with the teachings of the embodiments described throughout this disclosure. In step 1514, the UE 1506 receives the user data carried in the transmission, which may be performed by a client application executed on the UE 1506 associated with the host application executed by the host 1502.

In some examples, the UE 1506 executes a client application which provides user data to the host 1502. The user data may be provided in reaction or response to the data received from the host 1502. Accordingly, in step 1516, the UE 1506 may provide user data, which may be performed by executing the client application. In providing the user data, the client application may further consider user input received from the user via an input/output interface of the UE 1506. Regardless of the specific manner in which the user data was provided, the UE 1506 initiates, in step 1518, transmission of the user data towards the host 1502 via the network node 1504. In step 1520, in accordance with the teachings of the embodiments described throughout this disclosure, the network node 1504 receives user data from the UE 1506 and initiates transmission of the received user data towards the host 1502. In step 1522, the host 1502 receives the user data carried in the transmission initiated by the UE 1506.

One or more of the various embodiments improve the performance of OTT services, including security thereof, provided to the UE 1506 using the OTT connection 1550, in which the wireless connection 1570 forms the last segment.

In an example scenario, factory status information may be collected and analyzed by the host 1502. As another example, the host 1502 may process audio and video data which may have been retrieved from a UE for use in creating maps. As another example, the host 1502 may collect and analyze real-time data to assist in controlling vehicle congestion (e.g., controlling traffic lights). As another example, the host 1502 may store surveillance video uploaded by a UE. As another example, the host 1502 may store or control access to media content such as video, audio, VR, or AR which it can broadcast, multicast, or unicast to UEs. As other examples, the host 1502 may be used for energy pricing, remote control of non-time critical electrical load to balance power generation needs, location services, presentation services (such as compiling diagrams etc. from data collected from remote devices), or any other function of collecting, retrieving, storing, analyzing, and/or transmitting data.

In some examples, a measurement procedure may be provided for the purpose of monitoring data rate, latency, and other factors on which the one or more embodiments improve. There may further be an optional network functionality for reconfiguring the OTT connection 1550 between the host 1502 and the UE 1506 in response to variations in the measurement results. The measurement procedure and/or the network functionality for reconfiguring the OTT connection 1550 may be implemented in software and hardware of the host 1502 and/or the UE 1506. In some embodiments, sensors (not shown) may be deployed in or in association with other devices through which the OTT connection 1550 passes; the sensors may participate in the measurement procedure by supplying values of the monitored quantities exemplified above, or by supplying values of other physical quantities from which software may compute or estimate the monitored quantities. The reconfiguring of the OTT connection 1550 may include message format, retransmission settings, preferred routing, etc.; the reconfiguring need not directly alter the operation of the network node 1504. Such procedures and functionalities may be known and practiced in the art. In certain embodiments, measurements may involve proprietary UE signaling that facilitates measurements of throughput, propagation times, latency, and the like by the host 1502. The measurements may be implemented in that software causes messages to be transmitted, in particular empty or 'dummy' messages, using the OTT connection 1550 while monitoring propagation times, errors, etc.

Although the computing devices described herein (e.g., UEs, network nodes, hosts) may include the illustrated combination of hardware components, other embodiments may comprise computing devices with different combinations of components. It is to be understood that these computing devices may comprise any suitable combination of hardware and/or software needed to perform the tasks, features, functions, and methods disclosed herein. Determining, calculating, obtaining, or similar operations described herein may be performed by processing circuitry, which may process information by, for example, converting the obtained information into other information, comparing the obtained information or converted information to information stored in the network node, and/or performing one or more operations based on the obtained information or converted information, and as a result of said processing making a determination. Moreover, while components are depicted as single boxes located within a larger box or nested within multiple boxes, in practice computing devices may comprise multiple different physical components that make up a single illustrated component, and functionality may be partitioned between separate components. For example, a communication interface may be configured to include any of the components described herein, and/or the functionality of the components may be partitioned between the processing circuitry and the communication interface. In another example, non-computationally intensive functions of any of such components may be implemented in software or firmware and computationally intensive functions may be implemented in hardware.

In certain embodiments, some or all of the functionality described herein may be provided by processing circuitry executing instructions stored in memory, which in certain embodiments may be a computer program product in the form of a non-transitory computer-readable storage medium. In alternative embodiments, some or all of the functionality may be provided by the processing circuitry without executing instructions stored on a separate or discrete device-readable storage medium, such as in a hardwired manner. In any of those particular embodiments, whether executing instructions stored on a non-transitory computer-readable storage medium or not, the processing circuitry can be configured to perform the described functionality. The benefits provided by such functionality are not limited to the processing circuitry alone or to other components of the computing device, but are enjoyed by the computing device as a whole and/or by end users and a wireless network generally.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include Digital Signal Processors (DSPs), special-purpose digital logic, and the like. The processing circuitry may be configured to execute program code stored in memory, which may include one or several types of memory such as Read Only Memory (ROM), Random Access Memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

While processes in the figures may show a particular order of operations performed by certain embodiments of the present disclosure, it should be understood that such order is exemplary (e.g., alternative embodiments may perform the operations in a different order, combine certain operations, overlap certain operations, etc.).

Those skilled in the art will recognize improvements and modifications to the embodiments of the present disclosure. All such improvements and modifications are considered within the scope of the concepts disclosed herein, provided they do not depart from the scope of the invention as defined by the appended claims.

## Claims

1. A method performed for Generic Bootstrapping Authentication, GBA, of a User Equipment, UE, (500), the method comprising:
communicating (Fig. 6, step 0), at a GBA application (508) of the UE (500), with one or more network nodes of a cellular communications network (504) to run a GBA procedure during which the GBA application (508) obtains a key, Ks, and a Bootstrapping Transaction Identifier, B-TID;
providing (Fig. 6, step 1), at an application (506) of the UE (500), to the GBA application (508), a request for a key for the application (506), Ks_APP, the request comprising a Network Application Function, NAF, identifier, NAF-ID;
at the GBA application (508):
verifying (Fig. 6, step 2) that the application (506) is entitled to use a NAF (502) that corresponds to the NAF-ID; and
responsive to successful verification that the application (506) is entitled to use the NAF (502) that corresponds to the NAF-ID:
deriving (Fig. 6, step 2) the key, Ks_APP, for the application (506) based on: the key, Ks, the NAF-ID; and an additional parameter that is either a parameter generated by the GBA application (508) or an application identifier, APP-ID, of the application (506); and
sending (Fig. 6, step 3) a response to the application (506), the response comprising the B-TID and the key, Ks_APP, for the application (506); and
receiving, at the application (506), the response from the GBA application (508).

2. The method of claim 1 wherein the additional parameter is the APP-ID of the application (506), and wherein the request for the key, Ks_APP, comprises the APP-ID of the application (506).

3. The method of claim 1 or 2, wherein the additional parameter is the APP-ID of the application (506), and wherein the method further comprises:
authenticating the APP-ID, at the GBA application (508) on the UE (500),
wherein the steps of deriving (Fig. 6, step 2) the key, Ks_APP, and sending (Fig. 6, step 3) the response are performed responsive to successful authentication of the APP-ID and successful verification that the application (506) is entitled to use the NAF (502) that corresponds to the NAF-ID.

4. The method of claim 1 wherein the additional parameter is a parameter generated by the GBA application (508), and wherein the parameter generated by the GBA application (508) is a counter, a time-based parameter, or a random number.

5. The method of any of claims 1 to 4 wherein deriving (Fig. 6, step 2) the key, Ks_APP, for the application (506) comprises:
deriving a key, Ks_NAF, for the NAF (502) using a first Key Derivation Function, KDF, that is based on the key, Ks, and the NAF-ID; and
deriving the key, Ks_APP, for the application (506) using a second KDF that is based on the key, Ks_NAF, and the additional parameter.

6. The method of claim 5 the response sent from the GBA application (508) to the application (506) further comprises either the additional parameter or an encrypted version of the additional parameter.

7. The method of claim 6 wherein the response comprises an encrypted version of the additional parameter that is encrypted based on the key, Ks_NAF.

8. The method of any of claims 5 to 7 further comprising, at the application (506) on the UE (500):
sending (Fig. 6, step 4), to a Network Application Function, NAF, (502), an application request that comprises:
the B-TID,
application specific data, and
either the additional parameter or the encrypted version of the additional parameter.

9. The method of claim 8 further comprising the following steps
at the NAF (502):
receiving (Fig. 6, step 4) the application request;
responsive to receiving (Fig. 6, step 4) the application request, sending (Fig. 6, step 5) an authentication request to a Bootstrapping Function, BSF, (512) of the cellular communications system (504), the authentication request comprising the B-TID and the NAF-ID;
at the BSF (512):
receiving (Fig. 6, step 5) the authentication request from the NAF (502);
deriving (Fig. 6, step 6) a key, Ks_NAF, for the NAF (502) based on the NAF-ID; and
sending (Fig. 6, step 7) an authentication answer to the NAF (502), the authentication answer comprising the key, Ks_NAF; and
at the NAF (502):
receiving (Fig. 6, step 7) the authentication answer from the BSF (512);
deriving (Fig. 6, step 8) the key, Ks_APP, for the application (506) based on the key, Ks_NAF, and the additional parameter; and
communicating (Fig. 6, step 9) with the application (508) to execute an authentication protocol using the key, Ks_APP.

10. The method of any of claims 1 to 3 wherein:
the additional parameter is the APP-ID of the application (506); and
deriving (Fig. 6, step 2) the key, Ks_APP, for the application (506) comprises deriving the key, Ks_APP, for the application (506) using a Key Derivation Function, KDF, that is based on the key, Ks, and the NAF-ID and the APP-ID.

11. The method of claim 10 further comprising, at the application (506) on the UE (500):
sending (Fig. 6, step 4), to a Network Application Function, NAF, (502), an application request that comprises:
the B-TID;
application specific data; and
either the APP-ID or the encrypted version of the APP-ID.

12. The method of claim 11 further comprising the following steps
at the NAF (502):
receiving (Fig. 6, step 4) the application request;
responsive to receiving (Fig. 6, step 4) the application request, sending (Fig. 6, step 5) an authentication request to a Bootstrapping Function, BSF, (512) of the cellular communications system (504), the authentication request comprising the B-TID, the NAF-ID, and either the APP-ID or the encrypted version of the APP-ID;
at the BSF (512):
receiving (Fig. 6, step 5) the authentication request from the NAF (502);
deriving (Fig. 6, step 6) the key, Ks_APP, for the application (506) based on the NAF-ID and the APP-ID; and
sending (Fig. 6, step 7) an authentication answer to the NAF (502), the authentication answer comprising the key, Ks_APP; and
at the NAF (502):
receiving (Fig. 6, step 7) the authentication answer from the BSF (512);
communicating (Fig. 6, step 9) with the application (508) to execute an authentication protocol using the key, Ks_APP.

13. A method performed for Generic Bootstrapping Authentication, GBA, the method comprising:
at a GBA application (508) on a User Equipment, UE, (500):
communicating (Fig. 8, step 0) with one or more network nodes of a cellular communications network (504) to run a GBA procedure during which the GBA application (508) obtains a key, Ks, and a Bootstrapping Transaction Identifier, B-TID;
at an application (506) on the UE (500):
providing (Fig. 8, step 1), to a Network Application Function, NAF, client (700) on the UE, a request for a key, Ks_APP, for the application (506);
at the NAF client (700):
receiving (Fig. 8, step 1) the request for the key, Ks_APP, from the application (506);
authenticating and authorizing (Fig. 8, step 2) the application (506); and
responsive to successful authentication and authorization of the application (506):
sending (Fig. 8, step 3), to the GBA application (508), a request for a key, Ks_NAF, for a respective NAF (502);
at the GBA application (508):
receiving (Fig. 8, step 3) the request for the key, Ks_NAF, from the NAF client (700);
authenticating and authorizing (Fig. 8, step 4) the NAF client (700); and
responsive to successful authentication and authorization of the NAF client (700):
sending (Fig. 8, step 5), to the NAF client (700), a response comprising a Bootstrapping Transaction Identity, B-TID, and the key, Ks_NAF;
at the NAF client (700):
receiving (Fig. 8, step 5) the response from the GBA application (508);
deriving (Fig. 8, step 6) the key, Ks_APP, for the application (506) based on the key, Ks_NAF, and an additional parameter, the additional parameter being either: (a) an application identity, APP-ID, of the application (506) or (b) a parameter generated by the GBA application (508) and provided in or in association with the response; and
sending (Fig. 8, step 7), to the application (506), a response comprising the B-TID, the key, Ks_APP, and either the additional parameter or an encrypted version of the additional parameter; and
at the application (506):
receiving (Fig. 8, step 7) the response from the NAF client (700).

14. The method of claim 13 wherein the additional parameter is the APP-ID of the application (506), and wherein the request for the key, Ks_APP, comprises the APP-ID of the application (506).

15. The method of claim 13 wherein the additional parameter is a parameter generated by the GBA application (508), and wherein the parameter generated by the GBA application (508) is a counter, a time-based parameter, or a random number.

16. The method of any of claims 13 to 15 further comprising, at the application (506) on the UE (500):
sending (Fig. 8, step 8), to a Network Application Function, NAF, (502), an application request that comprises:
the B-TID;
application specific data; and
either: (i) the additional parameter or (ii) the encrypted version of the additional parameter.

17. The method of claim 16 further comprising the following steps:
at the NAF (502):
receiving (Fig. 8, step 8) the application request;
responsive to receiving (Fig. 8, step 8) the application request, sending (Fig. 8, step 9) an authentication request to a Bootstrapping Function, BSF, (512) of the cellular communications system (504), the authentication request comprising the B-TID and a NAF identity, NAF-ID, of the NAF (502);
at the BSF (512):
receiving (Fig. 8, step 9) the authentication request from the NAF (502);
deriving (Fig. 8, step 10) a key, Ks_NAF, for the NAF (502) based on the NAF-ID; and
sending (Fig. 8, step 11) an authentication answer to the NAF (502), the authentication answer comprising the key, Ks_NAF; and
at the NAF (502):
receiving (Fig. 8, step 11) the authentication answer from the BSF (512);
deriving (Fig. 8, step 12) the key, Ks_APP, for the application (506) based on the key, Ks_NAF, for the NAF (502) and the additional parameter; and
communicating (Fig. 8, step 13) with the application (508) to execute an authentication protocol using the key, Ks_APP.

18. A method performed for Generic Bootstrapping Authentication, GBA, the method comprising the following steps:
at a Network Application Function, NAF, (502):
obtaining (Fig. 9, step 1) a GPI from a cellular network (504), the GPI comprising info that comprises a parameter generated by the NAF (502);
sending (Fig. 9, step 2) a GPI push message to a GBA application (508) on a User Equipment, UE, (500), the GPI push message comprising the GPI;
at the GBA application (508) on the UE (500):
receiving (Fig. 9, step 2) the GPI push message;
processing (Fig. 9, step 3) the GPI such that the GBA application (508) obtains a Bootstrapping Transaction Identity, B-TID, and key, Ks_NAF, for the NAF (502);
discovering (Fig. 9, step 4) the application (506) on the UE (500);
sending (Fig. 9, step 5), to the application (506), a message comprising a key, Ks_APP, for the application (506), the key, Ks_APP, being based on the parameter;
at the application (506) on the UE (500):
receiving (Fig. 9, step 5) message comprising the key, Ks_APP, from the GBA application (508);
sending (Fig. 9, step 6) an application response to the NAF (502), the application response comprising the B-TID, application specific data, and either: (i) the info comprised in the GPI or (ii) an encrypted version of the info comprised in the GPI; and
at the NAF (502):
receiving (Fig. 9, step 6) the application response;
deriving (Fig. 9, step 7) the key, Ks_APP, for the application (506) based on the parameter; and
sending (Fig. 9, step 8), to the application (506) on the UE (500), a push message that is protected with the key, Ks_APP.

19. A system adapted to perform the functionality of the method as claimed in any of claims 1 to 18.

## Patentansprüche

1. Verfahren, das zur generischen Bootstrapping-Authentifizierung, GBA, einer Benutzerausrüstung, UE, (500) durchgeführt wird, wobei das Verfahren Folgendes umfasst:
Kommunizieren (Fig. 6, Schritt 0) bei einer GBA-Anwendung (508) der UE (500) mit einem oder mehreren Netzwerkknoten eines Mobilkommunikationsnetzwerks (504), um eine GBA-Prozedur auszuführen, bei dem die GBA-Anwendung (508) einen Schlüssel, Ks, und eine Bootstrapping-Transaktionskennung, B-TID erhält;
Bereitstellen (Fig. 6, Schritt 1) an einer Anwendung (506) der UE (500) für die GBA-Anwendung (508) einer Anforderung eines Schlüssels, Ks_APP, für die Anwendung (506), wobei die Anforderung eine Netzwerkanwendungsfunktions-, NAF, -Kennung, NAF-ID, umfasst;
bei der GBA-Anwendung (508):
Überprüfen (Fig. 6, Schritt 2), dass die Anwendung (506) berechtigt ist, eine NAF (502) zu verwenden, die der NAF-ID entspricht; und
als Reaktion auf erfolgreiche Überprüfung, dass die Anwendung (506) berechtigt ist, die NAF (502) zu verwenden, die der NAF-ID entspricht:
Ableiten (Fig. 6, Schritt 2) des Schlüssels, Ks_APP, für die Anwendung (506) basierend auf: dem Schlüssel Ks, der NAF-ID; und einem zusätzlichen Parameter, der entweder ein von der GBA-Anwendung (508) generierter Parameter oder eine Anwendungskennung, APP-ID, der Anwendung (506) ist; und
Senden (Fig. 6, Schritt 3) einer Antwort an die Anwendung (506), wobei die Antwort die B-TID und den Schlüssel, Ks_APP, für die Anwendung (506) umfasst; und
Empfangen der Antwort von der GBA-Anwendung (508) bei der Anwendung (506).

2. Verfahren nach Anspruch 1, wobei der zusätzliche Parameter die APP-ID der Anwendung (506) ist, und wobei die Anforderung des Schlüssels, Ks_APP, die APP-ID der Anwendung (506) umfasst.

3. Verfahren nach Anspruch 1 oder 2, wobei der zusätzliche Parameter die APP-ID der Anwendung (506) ist, und wobei das Verfahren weiter Folgendes umfasst:
Authentifizieren der APP-ID bei der GBA-Anwendung (508) auf der UE (500),
wobei die Schritte des Ableitens (Fig. 6, Schritt 2) des Schlüssels, Ks_APP, und des Sendens (Fig. 6, Schritt 3) der Antwort als Reaktion auf eine erfolgreiche Authentifizierung der APP-ID und eine erfolgreiche Überprüfung, dass die Anwendung (506) berechtigt ist, die NAF (502) zu verwenden, die der NAF-ID entspricht, durchgeführt werden.

4. Verfahren nach Anspruch 1, wobei der zusätzliche Parameter ein von der GBA-Anwendung (508) generierter Parameter ist, und wobei der von der GBA-Anwendung (508) generierte Parameter ein Zähler, ein zeitbasierter Parameter oder eine Zufallszahl ist.

5. Verfahren nach einem der Ansprüche 1 bis 4, wobei Ableiten (Fig. 6, Schritt 2) des Schlüssels, Ks_APP, für die Anwendung (506) Folgendes umfasst:
Ableiten eines Schlüssels, Ks_NAF, für die NAF (502) unter Verwendung einer ersten Schlüsselableitungsfunktion, KDF, die auf dem Schlüssel, Ks, und der NAF-ID basiert; und
Ableiten des Schlüssels, Ks_APP, für die Anwendung (506) unter Verwendung einer zweiten KDF, die auf dem Schlüssel, Ks_NAF, und dem zusätzlichen Parameter basiert.

6. Verfahren nach Anspruch 5, wobei die von der GBA-Anwendung (508) an die Anwendung (506) gesendete Antwort weiter entweder den zusätzlichen Parameter oder eine verschlüsselte Version des zusätzlichen Parameters umfasst.

7. Verfahren nach Anspruch 6, wobei die Antwort eine verschlüsselte Version des zusätzlichen Parameters umfasst, die basierend auf dem Schlüssel, Ks_NAF, verschlüsselt ist.

8. Verfahren nach einem der Ansprüche 5 bis 7, das bei der Anwendung (506) auf der UE (500) weiter Folgendes umfasst:
Senden (Fig. 6, Schritt 4) einer Anwendungsanforderung an eine Netzwerkanwendungsfunktion, NAF, (502), die Folgendes umfasst:
die B-TID,
anwendungsspezifische Daten und
entweder den zusätzlichen Parameter oder die verschlüsselte Version des zusätzlichen Parameters.

9. Verfahren nach Anspruch 8, weiter umfassend die folgenden Schritte:
bei der NAF (502):
Empfangen (Fig. 6, Schritt 4) der Anwendungsanforderung;
als Reaktion auf Empfangen (Fig. 6, Schritt 4) der Anwendungsanforderung, Senden (Fig. 6, Schritt 5) einer Authentifizierungsanforderung an eine Bootstrapping-Funktion, BSF, (512) des Mobilkommunikationssystems (504), wobei die Authentifizierungsanforderung die B-TID und die NAF-ID umfasst;
bei der BSF (512):
Empfangen (Fig. 6, Schritt 5) der Authentifizierungsanforderung von der NAF (502);
Ableiten (Fig. 6, Schritt 6) eines Schlüssels, Ks_NAF, für die NAF (502) basierend auf der NAF-ID; und
Senden (Fig. 6, Schritt 7) einer Authentifizierungsantwort an die NAF (502), wobei die Authentifizierungsantwort den Schlüssel, Ks_NAF, umfasst; und
bei der NAF (502):
Empfangen (Fig. 6, Schritt 7) der Authentifizierungsantwort von der BSF (512);
Ableiten (Fig. 6, Schritt 8) des Schlüssels, Ks_APP, für die Anwendung (506) basierend auf dem Schlüssel, Ks_NAF, und dem zusätzlichen Parameter; und
Kommunizieren (Fig. 6, Schritt 9) mit der Anwendung (508), um ein Authentifizierungsprotokoll unter Verwendung des Schlüssels, Ks_APP, auszuführen.

10. Verfahren nach einem der Ansprüche 1 bis 3, wobei:
der zusätzliche Parameter die APP-ID der Anwendung (506) ist; und
Ableiten (Fig. 6, Schritt 2) des Schlüssels, Ks_APP, für die Anwendung (506) Ableiten des Schlüssels, Ks_APP, für die Anwendung (506) unter Verwendung einer Schlüsselableitungsfunktion, KDF, umfasst, die auf dem Schlüssel Ks und der NAF-ID und der APP-ID basiert.

11. Verfahren nach Anspruch 10, das weiter bei der Anwendung (506) auf der UE (500) Folgendes umfasst: Senden (Fig. 6, Schritt 4) an eine Netzwerkanwendungsfunktion, NAF, (502) einer Anwendungsanforderung, die Folgendes umfasst:
die B-TID;
anwendungsspezifische Daten; und
entweder die APP-ID oder die verschlüsselte Version der APP-ID.

12. Verfahren nach Anspruch 11, weiter umfassend die folgenden Schritte:
bei der NAF (502):
Empfangen (Fig. 6, Schritt 4) der Anwendungsanforderung;
als Reaktion auf Empfangen (Fig. 6, Schritt 4) der Anwendungsanforderung, Senden (Fig. 6, Schritt 5) einer Authentifizierungsanforderung an eine Bootstrapping-Funktion, BSF, (512) des Mobilkommunikationssystems (504), wobei die Authentifizierungsanforderung die B-TID, die NAF-ID und entweder die APP-ID oder die verschlüsselte Version der APP-ID umfasst;
bei der BSF (512):
Empfangen (Fig. 6, Schritt 5) der Authentifizierungsanforderung von der NAF (502);
Ableiten (Fig. 6, Schritt 6) des Schlüssels, Ks_APP, für die Anwendung (506) basierend auf der NAF-ID und der APP-ID; und
Senden (Fig. 6, Schritt 7) einer Authentifizierungsantwort an die NAF (502), wobei die Authentifizierungsantwort den Schlüssel, Ks_APP, umfasst; und
bei der NAF (502):
Empfangen (Fig. 6, Schritt 7) der Authentifizierungsantwort von der BSF (512);
Kommunizieren (Fig. 6, Schritt 9) mit der Anwendung (508), um ein Authentifizierungsprotokoll unter Verwendung des Schlüssels, Ks_APP, auszuführen.

13. Verfahren, das zur generischen Bootstrapping-Authentifizierung, GBA, durchgeführt wird, wobei das Verfahren Folgendes umfasst:
bei einer GBA-Anwendung (508) auf einer Benutzerausrüstung, UE, (500):
Kommunizieren (Fig. 8, Schritt 0) mit einem oder mehreren Netzwerkknoten eines Mobilkommunikationsnetzwerks (504), um eine GBA-Prozedur auszuführen, bei dem die GBA-Anwendung (508) einen Schlüssel, Ks, und eine Bootstrapping-Transaktionskennung B-TID erhält;
bei einer Anwendung (506) auf der UE (500):
Bereitstellen (Fig. 8, Schritt 1) einer Anforderung eines Schlüssels, Ks_APP, für die Anwendung (506) an einen Netzwerkanwendungsfunktions-, NAF, -Client (700) auf der UE;
bei dem NAF-Client (700):
Empfangen (Fig. 8, Schritt 1) der Anforderung des Schlüssels, Ks_APP, aus der Anwendung (506);
Authentifizieren und Autorisieren (Fig. 8, Schritt 2) der Anwendung (506); und
als Reaktion auf ein erfolgreiches Authentifizieren und Autorisieren der Anwendung (506):
Senden (Fig. 8, Schritt 3) einer Anforderung eines Schlüssels, Ks_NAF, für eine entsprechende NAF (502) an die GBA-Anwendung (508);
bei der GBA-Anwendung (508):
Empfangen (Fig. 8, Schritt 3) der Anforderung des Schlüssels, Ks_NAF, vom NAF-Client (700);
Authentifizieren und Autorisieren (Fig. 8, Schritt 4) des NAF-Clients (700); und
als Reaktion auf ein erfolgreiches Authentifizieren und Autorisieren des NAF-Clients (700):
Senden (Fig. 8, Schritt 5) an den NAF-Client (700) einer Antwort, die eine Bootstrapping-Transaktionsidentität B-TID und den Schlüssel, Ks_NAF, umfasst;
bei dem NAF-Client (700):
Empfangen (Fig. 8, Schritt 5) der Antwort von der GBA-Anwendung (508);
Ableiten (Fig. 8, Schritt 6) des Schlüssels, Ks_APP, für die Anwendung (506) basierend auf dem Schlüssel, Ks_NAF, und einem zusätzlichen Parameter, wobei der zusätzliche Parameter entweder (a) eine Anwendungsidentität APP-ID der Anwendung (506) oder (b) ein von der GBA-Anwendung (508) generierter und in oder in Verbindung mit der Antwort bereitgestellter Parameter ist; und
Senden (Fig. 8, Schritt 7) an die Anwendung (506) einer Antwort, die die B-TID, den Schlüssel, Ks_APP, und entweder den zusätzlichen Parameter oder eine verschlüsselte Version des zusätzlichen Parameters umfasst; und
bei der Anwendung (506):
Empfangen (Fig. 8, Schritt 7) der Antwort vom NAF-Client (700).

14. Verfahren nach Anspruch 13, wobei der zusätzliche Parameter die APP-ID der Anwendung (506) ist, und wobei die Anforderung des Schlüssels, Ks_APP, die APP-ID der Anwendung (506) umfasst.

15. Verfahren nach Anspruch 13, wobei der zusätzliche Parameter ein von der GBA-Anwendung (508) generierter Parameter ist, und wobei der von der GBA-Anwendung (508) generierte Parameter ein Zähler, ein zeitbasierter Parameter oder eine Zufallszahl ist.

16. Verfahren nach einem der Ansprüche 13 bis 15, das bei der Anwendung (506) auf der UE (500) weiter Folgendes umfasst:
Senden (Fig. 8, Schritt 8) an eine Netzwerkanwendungsfunktion, NAF, (502) einer Anwendungsanforderung die Folgendes umfasst:
die B-TID;
anwendungsspezifische Daten; und
entweder: (i) den zusätzlichen Parameter oder (ii) die verschlüsselte Version des zusätzlichen Parameters.

17. Verfahren nach Anspruch 16, das weiter die folgenden Schritte umfasst:
bei der NAF (502):
Empfangen (Fig. 8, Schritt 8) der Anwendungsanforderung;
als Reaktion auf Empfangen (Fig. 8, Schritt 8) der Anwendungsanforderung, Senden (Fig. 8, Schritt 9) einer Authentifizierungsanforderung an eine Bootstrapping-Funktion, BSF, (512) des Mobilkommunikationssystems (504), wobei die Authentifizierungsanforderung die B-TID und eine NAF-Identität, NAF-ID, der NAF (502) umfasst;
bei der BSF (512):
Empfangen (Fig. 8, Schritt 9) der Authentifizierungsanforderung von der NAF (502);
Ableiten (Fig. 8, Schritt 10) eines Schlüssels, Ks_NAF, für die NAF (502) basierend auf der NAF-ID; und
Senden (Fig. 8, Schritt 11) einer Authentifizierungsantwort an die NAF (502), wobei die Authentifizierungsantwort den Schlüssel, Ks_NAF, umfasst; und
bei der NAF (502):
Empfangen (Fig. 8, Schritt 11) der Authentifizierungsantwort von der BSF (512);
Ableiten (Fig. 8, Schritt 12) des Schlüssels, Ks_APP, für die Anwendung (506) basierend auf dem Schlüssel, Ks_NAF, für die NAF (502) und dem zusätzlichen Parameter; und
Kommunizieren (Fig. 8, Schritt 13) mit der Anwendung (508), um ein Authentifizierungsprotokoll unter Verwendung des Schlüssels, Ks_APP, auszuführen.

18. Verfahren, das zur generischen Bootstrapping-Authentifizierung, GBA, durchgeführt wird, wobei das Verfahren die folgenden Schritte umfasst:
bei einer Netzwerkanwendungsfunktion, NAF, (502):
Erhalten (Fig. 9, Schritt 1) einer GPI von einem Mobilnetzwerk (504), wobei die GPI Informationen enthält, die einen von der NAF (502) generierten Parameter umfassen;
Senden (Fig. 9, Schritt 2) einer GPI-Push-Nachricht an eine GBA-Anwendung (508) auf einer Benutzerausrüstung, UE, (500), wobei die GPI-Push-Nachricht die GPI enthält;
bei der GBA-Anwendung (508) auf der UE (500):
Empfangen (Fig. 9, Schritt 2) der GPI-Push-Nachricht;
Verarbeiten (Fig. 9, Schritt 3) der GPI so, dass die GBA-Anwendung (508) eine Bootstrapping-Transaktionsidentität, B-TID, und einen Schlüssel, Ks_NAF, für die NAF (502) erhält;
Entdecken (Fig. 9, Schritt 4) der Anwendung (506) auf der UE (500);
Senden (Fig. 9, Schritt 5) an die Anwendung (506) einer Nachricht, die einen Schlüssel, Ks_APP, für die Anwendung (506) umfasst, wobei der Schlüssel, Ks_APP, auf dem Parameter basiert;
bei der Anwendung (506) auf der UE (500):
Empfangen (Fig. 9, Schritt 5) einer Nachricht mit dem Schlüssel, Ks_APP, aus der GBA-Anwendung (508);
Senden (Fig. 9, Schritt 6) einer Anwendungsantwort an die NAF (502), wobei die Anwendungsantwort die B-TID, anwendungsspezifische Daten und entweder (i) die in der GPI umfassten Informationen oder (ii) eine verschlüsselte Version der in der GPI umfassten Informationen umfasst; und
bei der NAF (502):
Empfangen (Fig. 9, Schritt 6) der Anwendungsantwort;
Ableiten (Fig. 9, Schritt 7) des Schlüssels, Ks_APP, für die Anwendung (506) basierend auf dem Parameter; und
Senden (Fig. 9, Schritt 8) einer mit dem Schlüssel, Ks_APP, geschützten Push-Nachricht an die Anwendung (506) auf der UE (500).

19. System, das zum Durchzuführen der Funktionalität des Verfahrens nach einem der Ansprüche 1 bis 18 angepasst ist.

## Revendications

1. Procédé réalisé pour une authentification d'amorçage générique (GBA) d'un Équipement d'Utilisateur (UE) (500), le procédé comprenant :
la communication (Fig. 6, étape 0), au niveau d'une application de GBA (508) de l'UE (500), avec un ou plusieurs nœuds de réseau d'un réseau de communications cellulaires (504) pour exécuter une procédure de GBA au cours de laquelle l'application de GBA (508) obtient une clé, Ks, et un identifiant de transaction d'amorçage, B-TID ;
la fourniture (Fig. 6, étape 1), au niveau de l'application (506) de l'UE (500), à l'application de GBA (508), d'une demande pour une clé pour l'application (506), Ks_APP, la demande comprenant un identifiant de fonction d'application réseau, NAF, NAF-ID ;
au niveau de l'application e dGBA (508) :
la vérification (Fig. 6, étape 2) que l'application (506) est autorisée à utiliser une NAF (502) qui correspond au NAF-ID ; et
à la suite de la vérification réussie que l'application (506) est autorisée à utiliser la NAF (502) qui correspond au NAF-ID :
la déduction (Fig. 6, étape 2) de la clé, Ks_APP, pour l'application (506) sur la base : de la clé, Ks, du NAF-ID ; et un paramètre supplémentaire qui est soit un paramètre généré par l'application de GBA (508), soit un identifiant d'application, APP-ID, de l'application (506) ; et
l'envoi (Fig. 6, étape 3) d'une réponse à l'application (506), la réponse comprenant le B-TID et la clé, Ks_APP, pour l'application (506) ; et
la réception, au niveau de l'application (506), de la réponse en provenance de l'application de GBA (508).

2. Procédé selon la revendication 1, dans lequel le paramètre supplémentaire est l'APP-ID de l'application (506) et dans lequel la demande pour la clé, Ks_APP, comprend l'APP-ID de l'application (506).

3. Procédé selon la revendication 1 ou 2, dans lequel le paramètre supplémentaire est l'APP-ID de l'application (506) et dans lequel le procédé comprend en outre :
l'authentification de l'APP-ID, au niveau de l'application de GBA (508) sur l'UE (500),
dans lequel les étapes de déduction (Fig. 6, étape 2) de la clé, Ks_APP, et de l'envoi (Fig. 6, étape 3) de la réponse sont effectuées à la suite d'une authentification réussie de l'APP-ID et d'une vérification réussie que l'application (506) est autorisée à utiliser la NAF (502) qui correspond au NAF-ID.

4. Procédé selon la revendication 1, dans lequel le paramètre supplémentaire est un paramètre généré par l'application de GBA (508), et dans lequel le paramètre généré par l'application de GBA (508) est un compteur, un paramètre basé sur le temps ou un nombre aléatoire.

5. Procédé selon l'une quelconque des revendications 1 à 4, dans lequel la déduction (Fig. 6, étape 2) de la clé, Ks_APP, pour l'application (506) comprend :
la déduction d'une clé, Ks_NAF, pour la NAF (502) à l'aide d'une première fonction de déduction de clé, KDF, qui est basée sur la clé, Ks, et le NAF-ID ; et
la déduction de la clé, Ks_APP, pour l'application (506) à l'aide d'une seconde KDF qui est basée sur la clé, Ks_NAF, et le paramètre supplémentaire.

6. Procédé selon la revendication 5, dans lequel la réponse envoyée depuis l'application de GBA (508) à l'application (506) comprend en outre soit le paramètre supplémentaire, soit une version cryptée du paramètre supplémentaire.

7. Procédé selon la revendication 6, dans lequel la réponse comprend une version cryptée du paramètre supplémentaire qui est crypté sur la base de la clé, Ks_NAF.

8. Procédé selon l'une quelconque des revendications 5 à 7, comprenant en outre, au niveau de l'application (506) sur l'UE (500) :
l'envoi (Fig. 6, étape 4), à une fonction d'application réseau, NAF, (502), d'une demande d'application qui comprend :
le B-TID,
des données spécifiques à une application, et
soit le paramètre supplémentaire, soit la version cryptée du paramètre supplémentaire.

9. Procédé selon la revendication 8, comprenant en outre les étapes suivantes consistant à :
au niveau de la NAF (502) :
recevoir (Fig. 6, étape 4) la demande d'application ;
à la suite de la réception (Fig. 6, étape 4) de la demande d'application, envoyer (Fig. 6, étape 5) une demande d'authentification à une fonction d'amorçage, BSF, (512) du système de communication cellulaire (504), la demande d'authentification comprenant le B-TID et le NAF-ID ;
au niveau de la BSF (512) :
recevoir (Fig. 6, étape 5) la demande d'authentification en provenance de la NAF (502) ;
déduire (Fig. 6, étape 6) une clé, Ks_NAF, pour la NAF (502) sur la base du NAF-ID ; et
envoyer (Fig. 6, étape 7) une réponse d'authentification à la NAF (502), la réponse d'authentification comprenant la clé, Ks_NAF ; et
au niveau de la NAF (502) :
recevoir (Fig. 6, étape 7) la réponse d'authentification en provenance de la BSF (512) ;
déduire (Fig. 6, étape 8) la clé, Ks_APP, pour l'application (506) sur la base de la clé, Ks_NAF, et du paramètre supplémentaire ; et
communiquer (Fig. 6, étape 9) avec l'application (508) pour exécuter un protocole d'authentification à l'aide de la clé, Ks_APP.

10. Procédé selon l'une quelconque des revendications 1 à 3, dans lequel :
le paramètre supplémentaire est l'APP-ID de l'application (506) ; et
la déduction (Fig. 6, étape 2) de la clé, Ks_APP, pour l'application (506) comprend la déduction de la clé, Ks_APP, pour l'application (506) à l'aide d'une fonction de déduction de clé, KDF, qui est basée sur la clé, Ks, et le NAF-ID et l'APP-ID.

11. Procédé selon la revendication 10, comprenant en outre, au niveau de l'application (506) sur l'UE (500) : l'envoi (Fig. 6, étape 4), à une fonction d'application réseau, NAF, (502), d'une demande d'application qui comprend :
le B-TID ;
des données spécifiques à une application, et
soit l'APP-ID, soit la version cryptée de l'APP-ID.

12. Procédé selon la revendication 11, comprenant en outre les étapes suivantes consistant à :
au niveau de la NAF (502) :
recevoir (Fig. 6, étape 4) la demande d'application ;
à la suite de la réception (Fig. 6, étape 4) de la demande d'application, envoyer (Fig. 6, étape 5) une demande d'authentification à une fonction d'amorçage, BSF, (512) du système de communication cellulaire (504), la demande d'authentification comprenant le B-TID, le NAF-ID et soit l'APP-ID, soit la version cryptée de l'APP-ID ;
au niveau de la BSF (512) :
recevoir (Fig. 6, étape 5) la demande d'authentification en provenance de la NAF (502) ;
déduire (Fig. 6, étape 8) la clé, Ks_APP, pour l'application (506) sur la base de la clé, Ks_NAF, et du paramètre supplémentaire ; et
envoyer (Fig. 6, étape 7) une réponse d'authentification à la NAF (502), la réponse d'authentification comprenant la clé, Ks_NAF ; et
au niveau de la NAF (502) :
recevoir (Fig. 6, étape 7) la réponse d'authentification en provenance de la BSF (512) ;
communiquer (Fig. 6, étape 9) avec l'application (508) pour exécuter un protocole d'authentification à l'aide de la clé, Ks_APP.

13. Procédé réalisé pour une authentification d'amorçage générique (GBA), le procédé comprenant :
au niveau d'une application de GBA (508) sur un Équipement d'Utilisateur, UE, (500) :
la communication (Fig. 8, étape 0) avec un ou plusieurs nœuds de réseau d'un réseau de communications cellulaires (504) pour exécuter une procédure GBA au cours de laquelle l'application de GBA (508) obtient une clé, Ks, et un identifiant de transaction d'amorçage, B-TID ;
au niveau d'une application (506) sur l'UE (500) :
la fourniture (Fig. 8, étape 1), à un client (700) de fonction d'application réseau, NAF, sur l'UE, d'une demande pour une clé, Ks_APP, pour l'application (506) ;
au niveau du client NAF (700) :
la réception (Fig. 8, étape 1) de la demande pour la clé, Ks_APP, en provenance de l'application (506) ;
l'authentification et l'autorisation (Fig. 8, étape 2) de l'application (506) ; et
à la suite de l'authentification et de l'autorisation réussies de l'application (506) :
l'envoi (Fig. 8, étape 3), à l'application de GBA (508), d'une demande pour une clé, Ks_NAF, pour une NAF respective (502) ;
au niveau de l'application de GBA (508) :
la réception (Fig. 8, étape 3) de la demande pour la clé, Ks_NAF, en provenance du client NAF (700) ;
l'authentification et l'autorisation (Fig. 8, étape 4) du client NAF (700) ; et
à la suite de l'authentification et de l'autorisation réussies du client NAF (700) :
l'envoi (Fig. 8, étape 5), au client NAF (700), d'une réponse comprenant un dentifiant ide transaction d'amorçage, B-TID, et la clé, Ks_NAF ;
au niveau du client NAF (700) :
la réception (Fig. 8, étape 5) de la réponse en provenance de l'application de GBA (508) ;
la déduction (Fig. 8, étape 6) de la clé, Ks_APP, pour l'application (506) sur la base de la clé, Ks_NAF, et d'un paramètre supplémentaire, le paramètre supplémentaire étant soit : (a) un identiant d'application, APP-ID, de l'application (506), soit (b) un paramètre généré par l'application de GBA (508) et fourni dans, ou en association avec, la réponse ; et
l'envoi (Fig. 8, étape 7), à l'application (506), d'une réponse comprenant le B-TID, la clé, Ks_APP, et soit le paramètre supplémentaire, soit une version cryptée du paramètre supplémentaire ; et
au niveau de l'application (506) :
la réception (Fig. 8, étape 7) de la réponse en provenance du client NAF (700).

14. Procédé selon la revendication 13, dans lequel le paramètre supplémentaire est l'APP-ID de l'application (506) et dans lequel la demande pour la clé, Ks_APP, comprend l'APP-ID de l'application (506).

15. Procédé selon la revendication 13, dans lequel le paramètre supplémentaire est un paramètre généré par l'application de GBA (508) et dans lequel le paramètre généré par l'application de GBA (508) est un compteur, un paramètre basé sur le temps ou un nombre aléatoire.

16. Procédé selon l'une quelconque des revendications 13 à 15, comprenant en outre, au niveau de l'application (506) sur l'UE (500), :
l'envoi (Fig. 8, étape 8), à une fonction d'application réseau, NAF, (502), d'une demande d'application qui comprend :
le B-TID ;
des données spécifiques à une application, et
soit : (i) le paramètre supplémentaire, soit (ii) la version cryptée du paramètre supplémentaire.

17. Procédé selon la revendication 16, comprenant en outre les étapes suivantes consistant à :
au niveau de la NAF (502) :
recevoir (Fig. 8, étape 8) la demande d'application ;
à la suite de la réception (Fig. 8, étape 8) de la demande d'application, envoyer (Fig. 8, étape 9) une demande d'authentification à une fonction d'amorçage, BSF, (512) du système de communication cellulaire (504), la demande d'authentification comprenant le B-TID et un identifiant de NAF, NAF-ID, de la NAF (502) ;
au niveau de la BSF (512) :
recevoir (Fig. 8, étape 9) la demande d'authentification en provenance de la NAF (502) ;
déduire (Fig. 8, étape 10) une clé, Ks_NAF, pour la NAF (502) sur la base du NAF-ID ; et
envoyer (Fig. 8, étape 11) une réponse d'authentification à la NAF (502), la réponse d'authentification comprenant la clé, Ks_NAF ; et
au niveau de la NAF (502) :
recevoir (Fig. 8, étape 11) la réponse d'authentification en provenance de la BSF (512) ;
déduire (Fig. 8, étape 12) la clé, Ks_APP, pour l'application (506) sur la base de clé, Ks_NAF, pour la NAF (502) et du paramètre supplémentaire ; et
communiquer (Fig. 8, étape 13) avec l'application (508) pour exécuter un protocole d'authentification à l'aide de la clé, Ks_APP.

18. Procédé réalisé pour une authentification par amorçage générique, GBA, le procédé comprenant les étapes suivantes consistant à :
au niveau d'une fonction d'application réseau, NAF, (502) :
obtenir (Fig. 9, étape 1) un GPI à partir d'un réseau cellulaire (504), le GPI comprenant des informations qui comprennent un paramètre généré par la NAF (502) ;
envoyer (Fig. 9, étape 2) un message push de GPI à une application de GBA (508) sur un Équipement d'Utilisateur, UE, (500), le message push de GPI comprenant le GPI ;
au niveau de l'application de GBA (508) sur l'UE (500) :
recevoir (Fig. 9, étape 2) le message push de GPI ;
traiter (Fig. 9, étape 3) le GPI de telle sorte que l'application de GBA (508) obtienne un identifiant de transaction d'amorçage, B-TID et une clé, Ks_NAF, pour la NAF (502) ;
découvrir (Fig. 9, étape 4) l'application (506) sur l'UE (500) ;
envoyer (Fig. 9, étape 5), à l'application (506), un message comprenant une clé, Ks_APP, pour l'application (506), la clé, Ks_APP, étant basée sur le paramètre ;
au niveau de l'application (506) sur l'UE (500) :
recevoir (Fig. 9, étape 5) un message comprenant la clé, Ks_APP, en provenance de l'application de GBA (508) ;
envoyer (Fig. 9, étape 6) une réponse d'application à la NAF (502), la réponse d'application comprenant le B-TID, des données spécifiques à une application et soit : (i) les informations comprises dans le GPI soit (ii) une version cryptée des informations comprises dans le GPI ; et
au niveau de la NAF (502) :
recevoir (Fig. 9, étape 6) la réponse d'application ;
déduire (Fig. 9, étape 7) la clé, Ks_APP, pour l'application (506) sur la base du paramètre ; et
envoyer (Fig. 9, étape 8), à l'application (506) sur l'UE (500), un message push qui est protégé par la clé, Ks_APP.

19. Système adapté pour exécuter la fonctionnalité du procédé selon l'une quelconque des revendications 1 à 18.
